# EUROPEAN PATENT APPLICATION

(11) **EP 4 488 320 A1**
(43) Date of publication of application: **08.01.2025**
(21) Application number: 23780329.1
(22) Date of filing: 27.03.2023
(51) Int. Cl.: C08J 5/04

(54) **CARBON FIBER REINFORCED COMPOSITE MATERIAL AND PREPREG**

(30) Priority: 30.03.2022 JP 2022055767
(71) Applicant: Toray Industries, Inc., Tokyo 103-8666 (JP)
(72) Inventor: HIRANABE, Ryuichiro, Iyo-gun, Ehime 791-3193 (JP); OCHI, Takashi, Iyo-gun, Ehime 791-3193 (JP)
(74) Representative: Prüfer & Partner mbB Patentanwälte · Rechtsanwälte
(86) International application number: PCT/JP2023/012166
(87) International publication number: WO 2023/190319

(57) **Abstract**

A carbon fiber reinforced material including the following components: [A] carbon fibers, [BCDc] a matrix resin, [Ec] thermoplastic resin particles, and [Fc] a conductive nanofiller; the carbon fiber reinforced material having laminated carbon fiber layers in which the carbon fibers [A] are impregnated with the matrix resin [BCDc], wherein in a cross-section obtained by cutting the carbon fiber reinforced material in a thickness direction at an arbitrary position, the thermoplastic resin particles [Ec] are found to have a major axis/minor axis ratio of not less than 1.1 for not less than 30% of the particles in terms of the number of particles, and wherein the conductive nanofiller [Fc] has a structure size of not less than 0.6 µm in an interlayer between carbon fiber layers. Provided is a carbon fiber reinforced material characterized in that it is capable of utilizing the tensile strength of carbon fibers at a high utilization rate, the material having both excellent compression strength and impact resistance, and having high tensile strength, and a prepreg with which the carbon fiber reinforced material can be produced.

## Description

### TECHNICAL FIELD

The present invention relates to a prepreg used to obtain a carbon fiber reinforced material, and a carbon fiber reinforced material using the prepreg.

### BACKGROUND ART

Despite their lightweight nature, reinforcing fibers such as carbon fibers and glass fibers have excellent mechanical properties in terms of, for example, the tensile strength and the compression strength, and also have excellent heat resistance and corrosion resistance. These reinforcing fibers are impregnated with a thermosetting resin such as an epoxy resin or a phenol resin to prepare prepregs, and the prepregs are molded and cured to form carbon fiber reinforced materials (which may be hereinafter referred to as CFRPs). These carbon fiber reinforced materials have been practically applied in a wide variety of fields including aerospace, automobiles, railway vehicles, ships, civil engineering, construction, and sports goods. In particular, for uses requiring high performance, fiber-reinforced composite materials using continuous reinforcing fibers are used. In such cases, carbon fibers are often used as reinforcing fibers since they have excellent specific strength and specific elastic modulus. In addition, thermosetting resins are often used as matrix resins, and the thermosetting resins are, in particular, epoxy resins since they have excellent adhesiveness to carbon fibers.

In past studies, carbon fiber reinforced materials had low impact resistance since cured products of thermosetting resins generally have low fracture toughness. In particular, in cases of structural members for aircraft, there have been problems regarding tool drops during assembling, hail impacts during the operation, and the like. However, nowadays, particles composed of a thermoplastic resin that are elastic bodies are added to a layer of a thermosetting resin containing no carbon fibers (which may be hereinafter referred to as interlayer), which layer is formed by lamination of prepregs, and sandwiched between carbon fiber layers. By this, the particles composed of the thermoplastic resin are allowed to undergo deformation upon application of an impact, to achieve improvement of the impact resistance. Carbon fiber reinforced materials prepared by curing prepregs obtained by such combination have excellent tensile strength, compression strength, and impact resistance, and hence are used in the aerospace field.

Although the carbon fiber reinforced materials have thus reached a practical level, the carbon fiber reinforced materials have low conductivity in a particular direction, so that a metal mesh or foil is placed on surfaces of carbon fiber composite materials in aircraft to provide a measure against lightning strikes. Since carbon fibers themselves have high conductivity, carbon fiber reinforced materials prepared therefrom have high conductivity in their fiber axis direction. However, due to low conductivity of the matrix resin, the carbon fiber reinforced materials tend to have lower conductivity in the directions other than the fiber axis direction compared to metals. The conductivity in the thickness direction has been especially low since carbon fibers are hardly present in the interlayer, and hence the interlayer serves as an insulating layer. In particular, in cases where particles composed of a thermoplastic resin (the so-called interlayer reinforcing particles) are added to an interlayer between carbon fiber layers as described above, the thickness of the interlayer as an insulating layer is maintained at several ten micrometers by the particles, resulting in a remarkable decrease in the conductivity in the thickness direction, to cause interruption of the electric current. In cases where the interlayer can have increased conductivity, the electric current caused by a lightning strike can be dispersed. Therefore, a carbon fiber reinforced material having lightning resistance can be obtained.

In order for the interlayer between the carbon fiber layers to have high conductivity, it is important to form conductive paths between the carbon fiber layers separated by the interlayer. The methods that have been devised therefor can be roughly divided into three types.

In the first method, conductors having a major axis that is equivalent to or longer than the interlayer thickness are placed in the interlayer, to achieve connection through the interlayer. Patent Document 1 describes a method in which conductive paths are formed by placing, in the interlayer, conductive particles having a particle diameter that is different from the interlayer thickness by not more than 10 µm. Patent Document 2 describes a method in which conductive paths are formed by placing, in the interlayer, multilayer carbon nanotubes having a high aspect ratio with a length of 1 mm and a diameter of 15 nm, and having a length sufficiently longer than the interlayer thickness.

In the second method, aggregates of a nanoscale conductive filler are included in a resin or the like to prepare masses having a size that is not smaller than the interlayer thickness, and the masses are placed in the interlayer to achieve the connection. Patent Document 3 describes a method in which a conductive paste containing a silver nanofiller at high concentration is placed in the interlayer by screen printing such that the conductive paste has a size of about 50 µm. Patent Document 4 describes a method in which carbon nanotubes having a length of 1.5 µm and a diameter of 10 nm are kneaded into a thermoplastic resin by melt kneading using a twin-screw extruder to form masses, and the diameter of each mass is adjusted to not more than 90 µm, followed by placement of the masses in the interlayer.

In the third method, conductors having a major axis that is equivalent to or longer than the interlayer thickness are placed similarly to the first method, and in addition, conductive paths between the conductors and the carbon fiber layers are increased. In the first method and the second method, conductive paths are formed only from carbon fibers in direct contact with conductors or with aggregates of conductors. In contrast, the third method is characterized in that conductive paths are formed also from carbon fibers not in direct contact with conductors. Patent Document 5 describes a method in which carbon particles having a major axis that is equivalent to or longer than the interlayer thickness are placed, and in addition, the conductive paths between the carbon fiber layers and the carbon particles are increased using carbon black aggregates that are structures having a structure size of about 400 nm. Patent Document 6 describes a method in which a prepreg containing conductive particles placed therein having a major axis equivalent to the interlayer thickness is produced, and the prepreg is passed through an S-wrap roll to open bundles in the carbon fiber layer, wherein the phenomenon that carbon fibers move in the direction toward the interlayer by the spring back during curing is utilized to increase the number of contacts between the carbon fiber layers and the carbon particles.

### PRIOR ART DOCUMENTS

### [Patent Documents]

[Patent Document 1] WO 2008/018421
[Patent Document 2] WO 2015/130368
[Patent Document 3] WO 2016/017553
[Patent Document 4] WO 2013/141916
[Patent Document 5] WO 2015/146781
[Patent Document 6] WO 2012/084197

### SUMMARY OF THE INVENTION

### PROBLEMS TO BE SOLVED BY THE INVENTION

As described above, conductors having a major axis (length) equivalent to or longer than the interlayer thickness are used to provide lightning resistance for carbon fiber composite materials. According to conventional ideas, it has been described that the interlayer thickness depends on the size of epoxy-insoluble thermoplastic resin particles, and that lightning resistance is imparted to a prepreg by inclusion of conductors having a major axis (length) that is equivalent to or longer than the size of the thermoplastic resin particles.

In view of the background art, an object of the present invention is to provide a carbon fiber composite material suitable as a structural material for aircraft bodies having excellent high conductivity and having both high tensile strength and high impact resistance, and a prepreg that is a molding material for obtaining the carbon fiber composite material, by forming conductive paths in an interlayer of the carbon fiber reinforced material using a conductive nanofiller. Further, unlike conventional conductive prepregs using conductive microparticles to which slit processing was hardly applicable, the above prepreg has excellent slit processability. Therefore, narrow prepregs to which automatic lamination is applicable can be obtained.

### MEANS FOR SOLVING THE PROBLEMS

In order to solve the above problems, the present invention has the following constitution.
(1) A carbon fiber reinforced material comprising the following components [A], [BCDc], [Ec], and [Fc]:
   [A]: carbon fibers;
   [BCDc]: a matrix resin;
   [Ec]: thermoplastic resin particles; and
   [Fc]: a conductive nanofiller;
   the carbon fiber reinforced material having laminated carbon fiber layers in which the carbon fibers [A] are impregnated with the matrix resin [BCDc],
   wherein in a cross-section obtained by cutting the carbon fiber reinforced material in a thickness direction at an arbitrary position, the thermoplastic resin particles [Ec] are found to have a major axis/minor axis ratio of not less than 1.1 for not less than 30% of the particles in terms of the number of particles, and
   wherein the conductive nanofiller [Fc] has a structure size of not less than 0.6 µm in an interlayer between carbon fiber layers.
(2) The carbon fiber reinforced material according to (1), wherein primary particles of the conductive nanofiller [Fc] have an aspect ratio of less than 10.
(3) The carbon fiber reinforced material according to (1) or (2), wherein the conductive nanofiller [Fc] is carbon black.
(4) The carbon fiber reinforced material according to any one of (1) to (3), wherein the interlayer thickness between the carbon fiber layers is not more than 30 µm.
(5) The carbon fiber reinforced material according to any one of (1) to (3),
   wherein the carbon fibers [A] are present as bundles,
   wherein the bundles have an areal weight of not less than 250 g/m², and
   wherein the interlayer thickness between the carbon fiber layers is not less than 36 µm.
(6) The carbon fiber reinforced material according to any one of (1) to (5), wherein a major component of the thermoplastic resin particles [Ec] is any one selected from polyamide 12, polyamide 6/12 copolymer, and Grilamid.
(7) The carbon fiber reinforced material according to any one of (1) to (6), further comprising a component [Gc]:
   [Gc]: conductive particles having an individual particle diameter of not less than 1 µm;
   wherein the [Gc] has a particle diameter distribution in which D50 is 11 µm to 100 µm.
(8) The carbon fiber reinforced material according to any one of (1) to (7), wherein in a cross-section obtained by cutting the carbon fiber reinforced material in a thickness direction at an arbitrary position, the conductive particles [Gc] are unevenly distributed such that not less than 80% by area of the particles are present in the interlayer between the carbon fiber layers.
(9) The carbon fiber reinforced material according to any one of (1) to (8), wherein the conductive nanofiller [Fc] has a structure size of less than 0.6 µm in the carbon fiber layers.
(10) A prepreg comprising: carbon fibers [A], an epoxy resin [Bp], an aromatic polyamine compound [Cp], a thermoplastic resin having a polyarylether backbone [Dp], thermoplastic resin particles [Ep], and a conductive nanofiller [Fp],
   wherein a value calculated according to the following Formula (1): {W[A] × (W[Ep1] × mass ratio of first resin + W[Ep2] × mass ratio of second resin)} / {(W[Bp1] + W[Cp1] + W[Dp1]) × mass ratio of first resin + (W[Bp2] + W[Cp2] + W[Dp2]) × mass ratio of second resin}
   (wherein the content (areal weight) of the carbon fibers [A] as a component is W_{[A]}; the contents (in parts by mass) of the epoxy resin [Bp], the aromatic polyamine compound [Cp], the thermoplastic resin having a polyarylether backbone [Dp], and the thermoplastic resin particles [Ep] as components in a first resin are W_{[Bp1]}, W_{[Cp1]}, W_{[DP1]}, and W_{[Ep1]}, respectively; and the contents (parts by mass) of the epoxy resin [Bp], the aromatic polyamine compound [Cp], the thermoplastic resin having a polyarylether backbone [Dp], and the thermoplastic resin particles [Ep] as components in a second resin are W_{[Bp2]}, W_{[Cp2]}, W_{[Dp2]}, and W_{[Ep2]}, respectively; and wherein in Formula (1), in a case of one-step impregnation without the second resin, the calculation is performed assuming a mass ratio of 1 for the first resin, and a mass ratio of 0 for the second resin)
   is not less than 5 and less than 60,
      wherein the thermoplastic resin particles [Ep] contain a thermoplastic resin insoluble in an epoxy resin as a major component,
      wherein the [Ep] has a Tg of less than 160°C,
      wherein the [Ep] has a Tm of less than 185°C, or does not exhibit a definite Tm, and
      wherein the [Ep] has a particle diameter distribution in which D10 is not less than 3 µm.
(11) The prepreg according to (10),
   wherein the carbon fibers [A] are present as bundles, and
   wherein the bundles have an areal weight of not less than 250 g/m².
(12) The prepreg according to (10) or (11), comprising:
   a first impregnate prepreg containing a mixture of the epoxy resin [Bp], the aromatic polyamine compound [Cp], the thermoplastic resin having a polyarylether backbone [Dp], and the conductive nanofiller [Fp], the mixture being impregnated in the bundles of the carbon fibers [A]; and
   second resin films composed of a mixture of the epoxy resin [Bp], the aromatic amine compound [Cp], the thermoplastic resin having a polyarylether backbone [Dp], the thermoplastic resin particles [Ep], and the conductive nanofiller [Fp], the second resin films being laminated on both sides of the first impregnate prepreg.
(13) The prepreg according to any one of (10) to (12), having a width of not more than 5 inches.
(14) The prepreg according to any of (10) to (13), further comprising conductive particles having an individual particle diameter of not less than 1 µm [Gp], wherein not less than 80% by area of the [Gp] is distributed within a depth range of 20% from a prepreg surface.
(15) A carbon fiber reinforced material obtained by curing of the prepreg according to any one of (10) to (14).

[Bp], [Cp], [Dp], [Ep], [Fp], and [Gp] are components contained in the prepreg, and [BCDc], [Ec], [Fc], and [Gc] are components contained in the carbon fiber reinforced material.

### EFFECT OF THE INVENTION

By the present invention, a carbon fiber reinforced material having both excellent tensile strength and excellent impact resistance, having high lightning resistance, and having excellent moldability can be obtained.

### BRIEF DESCRIPTION OF DRAWINGS

Fig. 1 is a cross-sectional schematic diagram of a carbon fiber reinforced material according to a conventional technique, wherein not less than a certain level of thickness of the interlayer is maintained by thermoplastic resin particles.
Fig. 2 is a cross-sectional schematic diagram of a carbon fiber reinforced material according to a conventional technique, wherein not less than a certain level of thickness of the interlayer is maintained by thermoplastic resin particles.
Fig. 3 is a cross-sectional schematic diagram of a carbon fiber reinforced material according to a conventional technique, wherein the distance at site X is rather long for a conductive path.
Fig. 4 is a cross-sectional schematic diagram of a carbon fiber reinforced material of the present invention, wherein conductive paths can be formed at all of Z1, Z2, and Z3.
Fig. 5 is a cross-sectional schematic diagram of a carbon fiber reinforced material developed for the purpose of imparting lightning resistance according to a conventional technique, wherein conductive paths in the interlayer are formed by conductive particles having a size equivalent to or larger than the interlayer thickness.
Fig. 6 is a cross-sectional schematic diagram of a carbon fiber reinforced material developed for the purpose of imparting lightning resistance according to a conventional technique, wherein conductive paths in the interlayer are formed by conductive fibers and nanotubes having a length longer than the interlayer thickness.
Fig. 7 is a schematic diagram of a cross-section of a CFRP according to a conventional technique. The diagram illustrates that a particle having a small particle diameter has entered a carbon fiber layer to disturb the layer.
Fig. 8 is an image of structure formation in a master batch.
Fig. 9 is an image of formation of an aggregate of structures in a master batch.
Fig. 10 is a cross-sectional schematic diagram of a carbon fiber reinforced material of the present invention, wherein a conductive path can be formed.
Fig. 11 is a cross-sectional schematic diagram for a case where a carbon fiber reinforced material having a high areal weight is prepared by a conventional technique, wherein thick portions are locally present in the interlayer, and there are portions where no conductive path is formed.
Fig. 12 is a cross-sectional schematic diagram for a case where a carbon fiber reinforced material having a high areal weight is prepared by a conventional technique, wherein thick portions are locally present in the interlayer, and there are portions where no conductive path is formed.

### MODE FOR CARRYING OUT THE INVENTION

### 1. Summary of Invention

Conventionally, a carbon fiber composite material includes: layers each composed of carbon fiber bundles and a thermosetting resin for fixing the carbon fiber bundles (hereinafter referred to as carbon fiber layers); and a layer of a thermosetting resin containing no carbon fibers (hereinafter referred to as interlayer), which layer is formed by lamination of prepregs, and sandwiched between carbon fiber layers. In cases where the prepreg is used in aerospace applications or the like, the interlayer contains particles composed of a thermoplastic resin for reducing an impact. As described above, for the improvement of the lightning resistance of a CFRP, it is important to form conductive paths in the interlayer that serves as an insulating layer. For this purpose, rather than conventional techniques in which conductors having a major axis (length) that is not shorter than the interlayer thickness (in other words, equivalent to or longer than the size of the thermoplastic resin particles) are included, the technique of the present invention is useful since the interlayer thickness is decreased by squashing epoxy-insoluble thermoplastic resin particles during the spring back or the compaction (hereinafter, when springback is mentioned, it also includes compaction), to achieve a specific aspect ratio.

In cases where the lightning resistance of a CFRP is to be increased, prepregs having a small carbon fiber areal weight may be laminated a large number of times to increase the number of interlayers and hence to reduce the amount of epoxy-insoluble thermoplastic resin particles per interlayer. By this, the thickness of each interlayer can be reduced to promote the formation of the conductive paths, resulting in improvement of the lightning resistance.

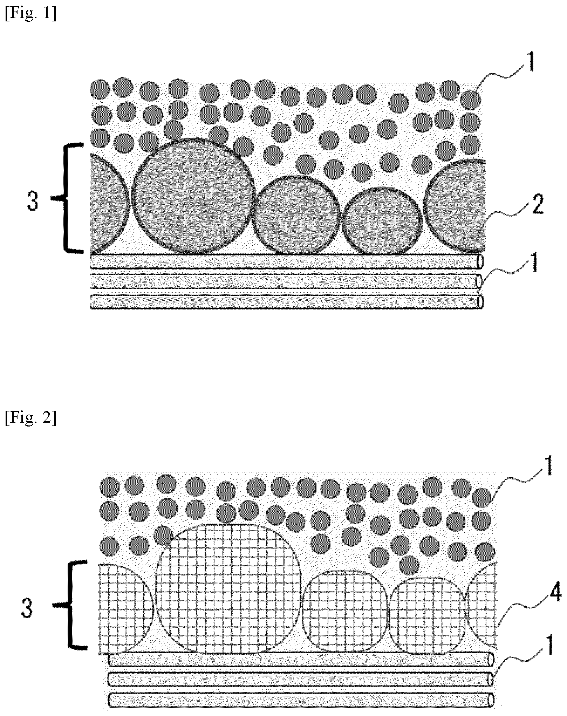

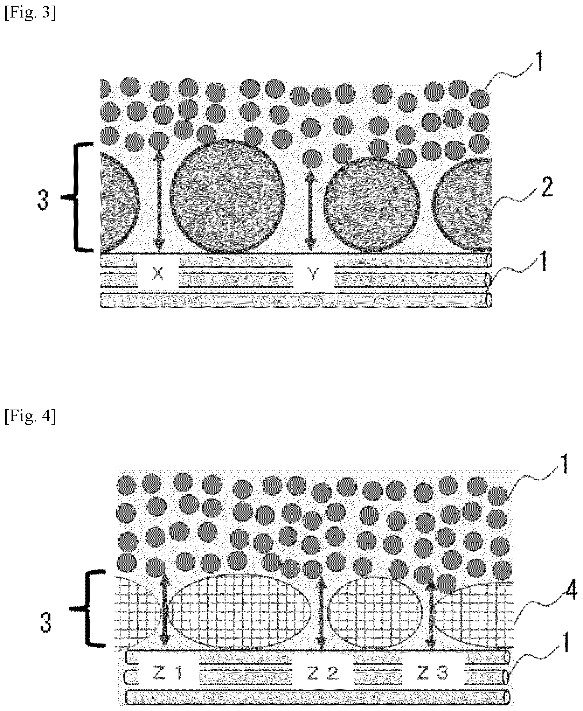

Fig. 1 is a cross-sectional schematic diagram of the CFRP of Comparative Example 3. Not less than a certain level of thickness of the interlayer, represented as 3 in the diagram, is maintained by thermoplastic resin particles, and the interlayer thickness is locally increased by the largest thermoplastic resin particle, to form an insulating layer. Fig. 2 is a cross-sectional schematic diagram of the CFRP of Comparative Example 1, which was prepared according to another embodiment. Not less than a certain level of thickness of the interlayer, represented as 3 in the diagram, is maintained by thermoplastic resin particles, and the interlayer thickness is locally increased by the largest thermoplastic resin particle, to form an insulating layer similarly to Fig. 1. However, there are also some thermoplastic resin particles having a particular aspect ratio. This is due to the fact that, although the interlayer contained thermoplastic resin particles that can be squashed during the spring back, there was no space for the squashing because of the dense presence of thermoplastic resin particles in the surrounding space. Fig. 3 is a cross-sectional schematic diagram of the CFRP of Comparative Example 8, which was prepared according to still another embodiment. Although the content of the thermoplastic resin particles is reduced, the distance at site X is rather long for a conductive path. As a result, this site serves as a local insulating layer. Fig. 4 is a cross-sectional schematic diagram of a CFRP of the present invention. The thickness of the interlayer 3 is reduced compared to Figs. 1 to 3 due to thermoplastic resin particles [Ec] having a specific aspect ratio, to achieve a uniform interlayer thickness. Conductive paths can be formed at all of Z1, Z2, and Z3.

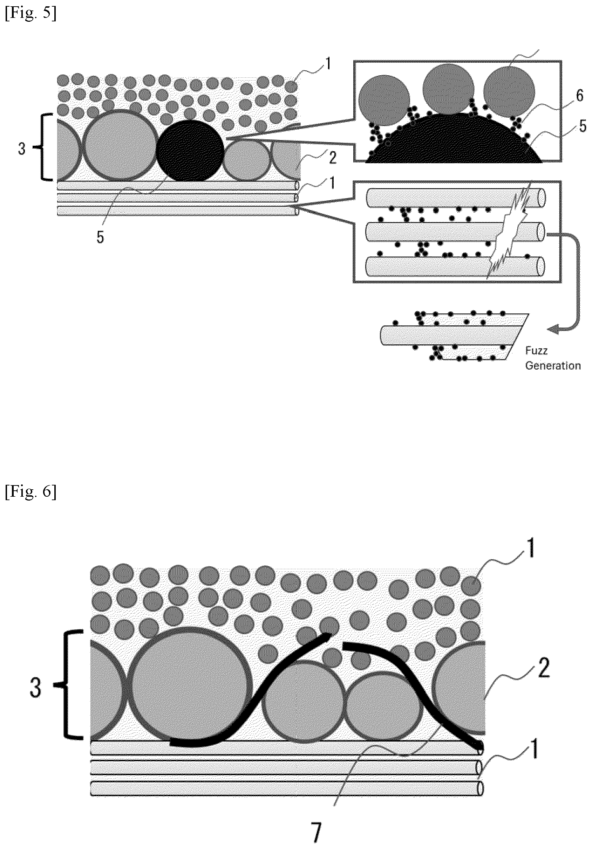

In the conductive prepregs that have been developed so far, improvement of the conductivity has been attempted based on the idea that the improvement can be achieved by placing conductors having a size equivalent to or larger than the interlayer thickness. Of the three kinds of methods described above, the first method is as follows. Fig. 5 is a cross-sectional schematic diagram of a CFRP corresponding to this method, wherein conductive particles 5 having a particle diameter equivalent to the thickness of the interlayer 3 are placed to form conductive paths. The second method is as follows. Fig. 6 is a cross-sectional schematic diagram of a CFRP corresponding to this method, wherein conductive paths are formed by placement of conductive fibers (including carbon nanotubes) 7 having a length longer than the interlayer thickness. Since the second method involves placement of masses of a conductive paste or the like (not shown), the method is actually the same as in Fig. 5 except that the masses of the conductive paste are used instead of the conductive particles 5. Regarding the third method, a balloon in Fig. 5 shows a magnified image of the interface and its vicinity between a carbon fiber layer and a conductive particle. This cross-sectional schematic diagram illustrates that structures of a conductive nanofiller 6 form conductive paths between carbon fibers and conductive particles. Thus, the methods are the same as the present invention regarding the fact that conductors having a size equivalent to or larger than the interlayer thickness are placed to form conductive paths in an attempt to impart the lightning resistance.

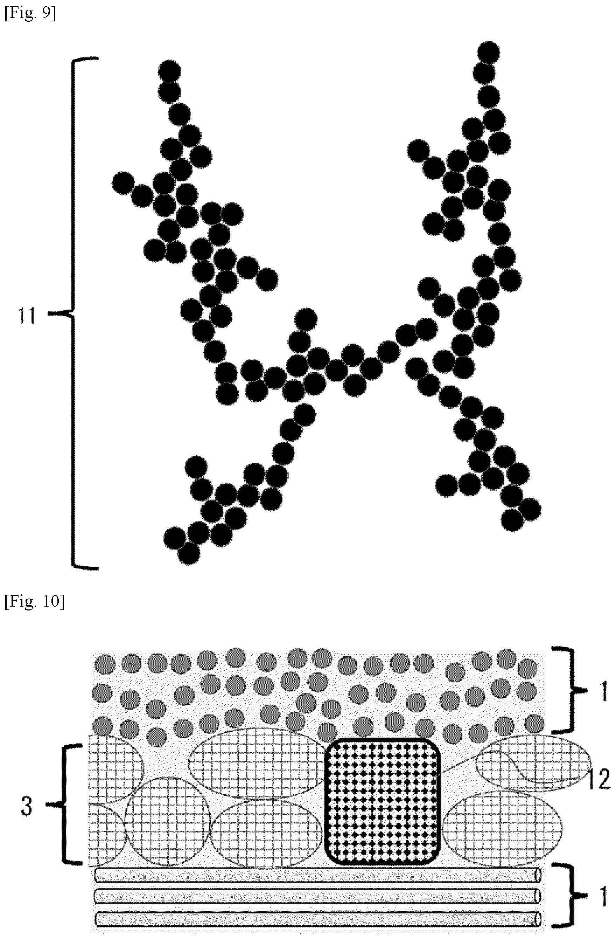

On the other hand, in recent years, use of prepregs with a high carbon fiber content (areal weight) has been demanded in the production of CFRPs. In such cases, when, for example, the carbon fiber content (areal weight) in each carbon fiber layer is doubled, the number of carbon fiber layers in the CFRP obtained by their lamination is almost halved based on simple calculation, and the number of interlayers is also halved. Accordingly, in cases where the same amount of thermoplastic resin particles are to be included in a CFRP having half the number of interlayers, twice the amount of thermoplastic resin particles need to be included in each interlayer. Thus, CFRPs produced using prepregs with a high areal weight tend to contain a larger amount of thermoplastic resin particles per interlayer, and it was found that, in such cases, stacking of a plurality of thermoplastic resin particles in the thickness direction causes local increases in the interlayer thickness as shown in Fig. 10, to form sites where contact of the conductors is inhibited, resulting in a drastic decrease in the lightning resistance that cannot be simply assumed from the amount of the particles contained.

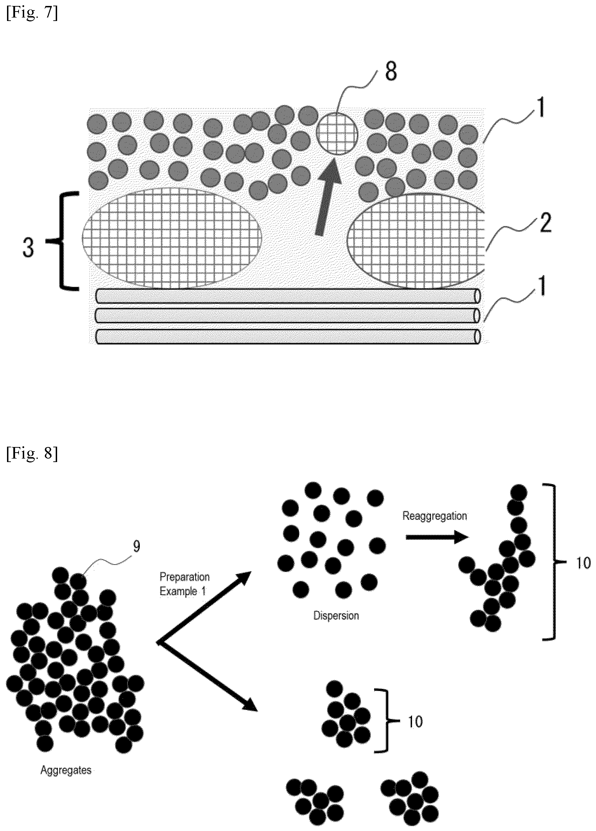

In view of this, the present inventors considered that reduction of the interlayer thickness, and prevention of the local formation of the thick sites are important. However, while the thickness of the interlayer 3 largely depends on the particle diameter of thermoplastic resin particles 2, simple placement of thermoplastic resin particles 2 having a small particle diameter in order to reduce the thickness of the interlayer 3 allows entrance of particles having a small particle diameter 8 into the carbon fiber layer as schematically illustrated in Fig. 7, resulting only in the production of a CFRP that may have low impact resistance and tensile strength.

The present inventors inferred that, by using thermoplastic resin particles that are present at a specific aspect ratio in an interlayer between carbon fiber layers composed of carbon fibers impregnated with a matrix resin, the interlayer thickness can be reduced compared to conventional CFRPs while the impact resistance is maintained at the same level as those of conventional CFRPs containing thermoplastic resin particles, and while the occurrence of the sites where the interlayer thickness is locally increased can be prevented. Further, based on the idea that the size of the structures of the conductive nanofiller is important for increasing the conductive paths, the present inventors intensively studied to discover that, by mixing the conductive nanofiller with the epoxy, and shearing the resulting mixture, a conductive nanofiller in which structures with a useful size are formed can be obtained.

The prepreg of the present invention requires the following components.
[A]: Carbon fibers
[Bp]: Epoxy resin
[Cp]: Aromatic polyamine compound
[Dp]: Thermoplastic resin having a polyarylether backbone
[Ep]: Particles containing, as a major component, a thermoplastic resin insoluble in an epoxy resin
[Fp]: Conductive nanofiller

The carbon fiber reinforced material of the present invention requires the following components.
[A]: Carbon fibers
[BCDc]: Matrix resin
[Ec]: Thermoplastic resin particles
[Fc]: Conductive nanofiller

### 2. Interlayer Thickness (A)

The thermoplastic resin particles [Ec] constituting the CFRP of the present invention are found to have a major axis/minor axis ratio (aspect ratio) of not less than 1.1 in a cross-section obtained by cutting the CFRP in the thickness direction at an arbitrary position as illustrated in Fig. 4, and the interlayer thickness is reduced compared to those of CFRPs using thermoplastic resin particles according to conventional techniques. The aspect ratio is preferably not less than 1.25, more preferably not less than 1.4. The major axis is preferably in the direction parallel to the carbon fiber axis. By using thermoplastic resin particles [Ec] having such an aspect ratio, a reduced interlayer thickness can be achieved without allowing the particles to enter the carbon fiber layer. The aspect ratio herein is defined as major axis ÷ minor axis in an image of a cross-section obtained by cutting a CFRP in the thickness direction at an arbitrary position, wherein the major axis is the longest inner diameter among the measurable particle inner diameters passing through the center of an arbitrarily selected thermoplastic resin particle [Ec], and the minor axis is the inner diameter of the thermoplastic resin particle [Ec] that is perpendicular to the above-defined major axis. As described below in Examples, the aspect ratio is determined as the average of aspect ratios individually determined for 100 particles. Although there is no upper limit, the aspect ratio is preferably less than 5, more preferably less than 2. In cases where the aspect ratio is within the preferred range, excellent impact resistance can be achieved. Since the CFRP according to the present invention contains thermoplastic resin particles [Ec], the CFRP can have high impact resistance, and the interlayer thickness can be reduced. Therefore, conductive paths can be formed between the upper and lower carbon fibers, and the lightning resistance can be increased while the tensile strength and the impact resistance are maintained.

The CFRP of the present invention is characterized in that, in cases where the carbon fibers [A] have an areal weight of not more than 200 g/m² (which may be hereinafter referred to as gsm), a reduced thickness can be achieved in the thickness direction in spite of the presence of the thermoplastic resin particles [Ec] in the interlayer 3 between carbon fiber layers. Conventional prepregs are often designed such that the carbon fibers [A] have an areal weight of about 130 g/m² or 190 g/m², and thermoplastic resin particles "Ep", which have a smaller particle diameter than that of conductors, are conventionally used to allow the conductors to contact the upper and lower carbon fibers [A]. Conventional conductive CFRPs have an interlayer average thickness of 31 to 40 µm, and this thickness is dependent on the particle diameters of the thermoplastic resin particles and the conductive particles having a larger diameter. As mentioned above, the thermoplastic resin particles have a variation in the particle diameter. For example, particles having an average particle diameter of about 20 µm include particles having an individual particle diameter of not less than 40 µm at several percents. These thermoplastic resin particles having a large individual particle diameter and the conductive particles cause increases in the interlayer thickness, resulting in an average interlayer thickness of not less than 31 µm. The interlayer 3 between the carbon fiber layers has a thickness of preferably not more than 30 µm, more preferably less than 20 µm, still more preferably less than 12 µm. In cases where the thickness is within this range, conductive paths can be relatively easily formed even by aggregates of the conductive nanofiller alone, and higher lightning resistance can be achieved compared to cases where conductors having a large diameter are used. Furthermore, the tensile strength and the impact resistance can be maintained due to the presence of thermoplastic resin particles [Ec] having the aspect ratio obtained by squashing of thermoplastic resin particles having a large individual particle diameter during the spring back. Regarding the lower limit, the thickness is preferably not less than 3 µm, more preferably not less than 5 µm. In cases where the thickness is 8 µm, the impact resistance can be increased.

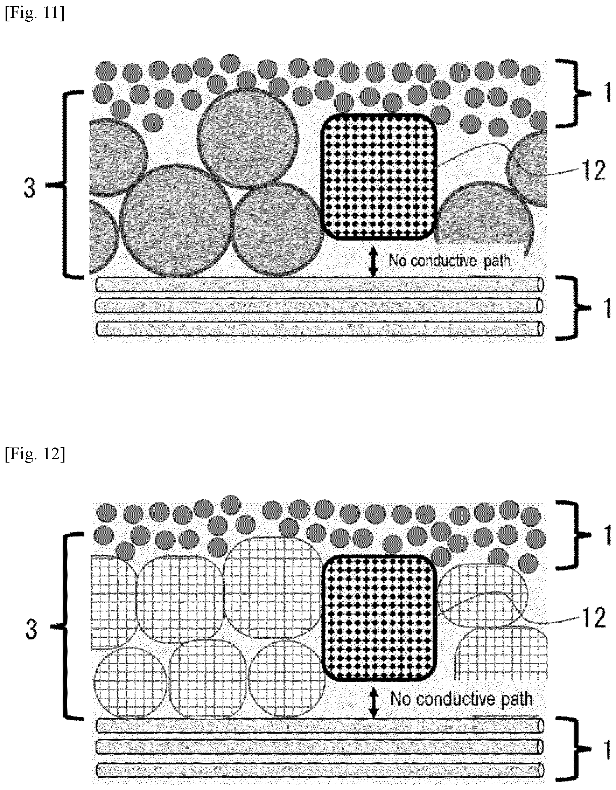

On the other hand, CFRPs of the present invention containing thermoplastic resin particles [Ec] having the aspect ratio are more useful in cases where the carbon fibers [A] have a high areal weight as described above. In recent years, studies have been carried out on the preparation of a CFRP by laminating prepregs containing carbon fibers [A] having an areal weight of as high as not less than 250 g/m² a small number of times, and curing the resulting laminate. This CFRP needs to be designed such that each interlayer contains a large amount of thermoplastic resin particles [Ep] since the number of interlayers in the CFRP is small. Since the lightning resistance was sometimes low in such cases, the present inventors studied its cause to discover that, in cases where each interlayer contains a large amount of thermoplastic resin particles [Ep], stacking of a plurality of thermoplastic resin particles [Ep] occurs in the thickness direction to cause local expansion of the interlayer as illustrated in Fig. 11. The present inventors then considered that connection between the upper and lower carbon fibers [A] cannot be achieved through the conductors at the locally expanded portions, resulting in interruption of the electric current. This cannot be solved simply by reducing the particle diameter of thermoplastic resin particles [Ep] because the overlap between the particles cannot be controlled. However, as illustrated in Fig. 10, the CFRP of the present invention can have interlayers with a uniform thickness as designed in advance since, during the spring back, the thermoplastic resin particles [Ep] are squashed at the locally expanded portions to become thermoplastic resin particles [Ec] having the aspect ratio. As a result, conductive paths can be formed to obtain the high lightning resistance. On the other hand, it has been found that, in cases where the amount of the thermoplastic resin particles [Ec] contained in each interlayer is too large, the conductivity in the thickness direction of the interlayer decreases. This was found to be due to the fact that, as illustrated in Fig. 12, highly dense distribution of the thermoplastic resin particles prevents the achievement of the aspect ratio of not less than 1.1, resulting in occurrence of locally thick portions in the interlayer to cause unevenness of the thickness. In order to solve this problem, the amount of the [Ep] included in the prepreg may be designed such that the amount of the thermoplastic resin particles [Ec] contained in each interlayer of the resulting CFRP becomes not more than a certain level. The calculation equation for determining the amount of the thermoplastic resin particles [Ec] contained in each interlayer is hereinafter referred to as Formula (1). Its specific example is described later.

The CFRP of the present invention is characterized in that it has high lightning resistance even in cases where the carbon fibers [A] have an areal weight of not less than 250 g/m², and where each interlayer is thick due to the presence of a large amount of thermoplastic resin particles [Ec] in the interlayer. For the production of an effect of the present invention, the average interlayer thickness is preferably not less than 36 µm, more preferably not less than 41 µm, still more preferably not less than 45 µm. Regarding the upper limit, the average interlayer thickness is preferably not more than 70 µm, more preferably less than 60 µm, still more preferably less than 55 µm. In cases where the preferred upper limit is satisfied, conductive paths can be easily formed.

The thermoplastic resin particles [Ec] can have the above-described aspect ratio in cases where the particles are squashed such that the carbon fiber layer and the interlayer have uniform thickness during the curing. However, the aspect ratio is usually variable among the particles. Specifically, when the aspect ratio is measured for 100 particles, and the measured values of aspect ratio are sorted in ascending order, the 30 highest-rank particles have the aspect ratio described above. Further, the 10 lowest-rank particles may, but do not necessarily need to, have an aspect ratio of not less than 1.05 and less than 1.1.

Regarding the range within which the carbon fiber layer and the interlayer can be said to have uniform thicknesses, the minimum thickness of the carbon fiber layer is preferably not less than 85%, more preferably not less than 95%, still more preferably not less than 97% relative to the average thickness of the carbon fiber layer. The maximum thickness is preferably not more than 130%, more preferably less than 110%, still more preferably less than 105%. Since carbon fiber layers and their interlayers are adjacent to each other, each interlayer can be said to have a uniform thickness in cases where each carbon fiber layer has a uniform thickness. Therefore, either layer may be measured to judge the uniformity. Usually, carbon fiber layers are laminated in directions in which they have different carbon fiber axes between the upper and lower sides of each interlayer. Since carbon fibers oriented, for example, at 0° cannot be easily identified, it is preferred to judge the uniformity for a layer of carbon fibers oriented at +45° or -45°.

A method of forming an interlayer of the CFRP of the present invention is described below. Prepregs are prepared by pressing a thermosetting resin or the like onto carbon fiber bundles to impregnate the bundles with the resin or the like. During heating/curing of laminated prepregs, the viscosity of the thermosetting resin decreases to cause relaxation of the pressure, allowing expansion of the carbon fiber bundles in the thickness direction, and also allowing the epoxy resin on the prepreg surface to move into the adjacent carbon fiber layers. This is the so-called spring back. In this process, carbon fibers [A] are brought into contact with structures of the conductive nanofiller [Fp] present on the prepreg surface, to form conductive paths. As a result, the thickness of each interlayer in the CFRP decreases. The present inventors inferred that, since the interlayer thickness in the CFRP depends on the spring back, the shape of the thermoplastic resin particles [Ec] constituting the CFRP of the present invention can be formed by utilization of the spring back. Specifically, by placing, in the interlayer, thermoplastic resin particles [Ep] having a particle diameter that is large enough not to allow entrance of the particles into the carbon fiber layers, and by allowing the thermoplastic resin particles [Ep] to be squashed in the thickness direction at the time when the interlayer thickness decreases by the spring back, the thermoplastic resin particles can be placed in the interlayer without allowing their entrance into the carbon fiber layers, and the interlayer thickness can be reduced compared to those of conventional CFRPs in which thermoplastic resin particles are inserted. Therefore, the resulting form easily allows formation of the conductive paths. It is thus preferred to use thermoplastic resin particles [Ep] that can be easily squashed, and to control the particle diameter and the amount of the thermoplastic resin particles [Ep] included, such that the space for the squashing is secured.

The thermoplastic resin particles [Ec] constituting the CFRP of the present invention have impact resistance since they are independently present in the matrix resin [BCDc]. The independent presence is defined herein as the fact that, when a cross-section of a CFRP is observed under a scanning electromicroscope, a digital microscope, or the like, interfaces between the thermoplastic resin particles [Ec] and the matrix resin [BCDc] can be found to enable recognition of the particles. Here, the shape of the thermoplastic resin particles [Ec] as observed in the cross-section is not limited to circular shapes, and examples of the shape also include other shapes, including those with deformation. Although part of the matrix resin [BCDc] may enter the thermoplastic resin particles [Ec], such particles are also included in the independent thermoplastic resin particles [Ec] as long as the interfaces can be found. The situation in which the thermoplastic resin particles cannot maintain an independent shape is basically caused by dissolution of thermoplastic resin particles [Ep] into the epoxy resin [Bp] in a stage before curing of the resin composition. Therefore, it is preferred to select thermoplastic resin particles [Ep] insoluble in the epoxy resin [Bp]. The selection of the thermoplastic resin particles [Ep] may be carried out by the following method. Thermoplastic resin particles as a candidate of the thermoplastic resin particles [Ep] are mixed with an epoxy resin [Bp]. The resulting mixture is heated at about 150°C, and observed under the microscope. In cases where the thermoplastic resin particles [Ep] do not show substantial reduction from their original size, and where interfaces are found between the particles and the epoxy resin [Bp], those particles may be selected. Further, since the independent presence of the particles may be disturbed due to melting under heat and mixing, the melting point (hereinafter referred to as Tm), if any, of the thermoplastic resin particles [Ep] is preferably not less than 130°C, more preferably not less than 140°C, still more preferably not less than 150°C. In cases where the thermoplastic resin particles [Ep] do not exhibit a Tm, the glass transition temperature (hereinafter referred to as Tg) is preferably not less than 100°C, more preferably not less than 110°C, still more preferably not less than 120°C.

The thermoplastic resin particles [Ep] constituting the prepreg of the present invention are the so-called interlayer-reinforcing particles. The particles contain, as a major component, a component insoluble in the epoxy resin [Bp] and the aromatic polyamine compound [Cp], and the particles retain their predetermined shape even after the prepreg is molded under heat and pressure to form the CFRP, in which the particles have become the thermoplastic resin particles [Ec]. Usually, the thermoplastic resin particles [Ec] have a squashed shape, which is different from the shape of the thermoplastic resin particles [Ep] before the molding. The thermoplastic resin particles [Ep] need to have a Tg of less than 160°C. The Tg is more preferably not more than 150°C, still more preferably not more than 140°C. In cases where the thermoplastic resin particles [Ep] exhibit a Tm, the Tm needs to be less than 185°C. The Tm is more preferably less than 177°C, still more preferably less than 174°C. However, the thermoplastic resin particles [Ep] do not necessarily need to exhibit a definite Tm. In cases where these ranges are satisfied, during the spring back that occurs at the time of curing of the prepreg under heat, the thermoplastic resin particles [Ep] are retained at a temperature higher than the temperature at which deformation of the particles occurs. This causes the phenomenon that the thermoplastic resin particles [Ep] are squashed due to the pressure by the spring back to become thermoplastic resin particles [Ec]. As a result, the thermoplastic resin particles [Ec] have the specific aspect ratio, and the interlayer thickness between the carbon fiber layers is reduced. In cases where the curing is performed at 170°C to 190°C, which corresponds to normal curing temperature for the production of CFRPs in the aerospace field, and where the Tg and the Tm are within the ranges described above, the thermoplastic resin particles can be squashed in the thickness direction of the CFRP to reduce the thickness between the carbon fiber layers. As a material of particles having such properties, polyamide 12, polyamide 6/12 copolymer, or Grilamid is preferred. The material is more preferably the Grilamid exemplified in Example 1 of JP 1-104624 A, which is a semi IPN (macromolecular interpenetrating network structure) polyamide.

Examples of the shape of the thermoplastic resin particles [Ep] constituting the prepreg of the present invention include amorphous shapes, spherical shapes, porous shapes, needle-like shapes, whisker-like shapes, and flake-like shapes. In particular, in cases where the particles have a spherical shape, they do not cause decreases in the flow properties of the epoxy resin [Bp], the aromatic polyamine compound [Cp], or the thermoplastic resin having a polyarylether backbone [Dp] at the time of the curing into the CFRP, so that excellent impregnating properties into the carbon fibers can be achieved while entrance of the thermoplastic resin particles [Ep] themselves into the carbon fiber layers can be suppressed. This is preferred since decreases in the mechanical properties due to, for example, defects such as voids, or disturbance of the carbon fiber array caused by entrance of thermoplastic resin particles [Ep] into the carbon fiber layers can be prevented. Such spherical thermoplastic resin particles [Ep] can become thermoplastic resin particles [Ec] having a specific aspect ratio as described above in the process of production of the CFRP.

Regarding the thermoplastic resin particles [Ec] constituting the CFRP of the present invention, when the total area of cross-sections of those particles is measured in a cross-section obtained by cutting the CFRP in the thickness direction at an arbitrary position, not less than 80% by area of the particles are preferably present, not less than 90% by area of the particles are more preferably present, not less than 95% by area of the particles are still more preferably present in the resin composition in the interlayer 3 between the carbon fiber layers. The placement of the thermoplastic resin particles [Ec] in the interlayer 3 improves the impact resistance. Entrance of thermoplastic resin particles [Ec] into the carbon fiber layers leads to disturbance of the carbon fiber array, causing deterioration of the tensile strength and the impact resistance, and also the lightning resistance of the carbon fiber layers. By placing a large amount of thermoplastic resin particles [Ec] in the interlayer, these properties can be favorably maintained. In order to achieve their placement at not less than 80% by area, the CFRP is preferably obtained by laminating and curing prepregs containing the thermoplastic resin particles [Ep] near the surface. In cases where a large amount of thermoplastic resin particles [Ec] are contained in the carbon fiber layers, carbon fibers are less likely to contact each other near the thermoplastic resin particles [Ec]. Therefore, the electric current tends to be interrupted, resulting in a decrease in the conductivity of the carbon fiber layers. On the other hand, in cases where a large amount of thermoplastic resin particles [Ec] are contained in the interlayer, conductive paths cannot be easily formed between the carbon fibers on the upper and lower sides of the interlayer, resulting in a decrease in the conductivity of the interlayer. From the viewpoint of the lightning resistance, a larger amount of thermoplastic resin particles [Ec] may be included in either the carbon fiber layers or the interlayer such that the lightning resistance can be more easily maintained. However, since a prepreg containing thermoplastic resin particles [Ep] in the carbon fiber layer has low slit processability, and since a CFRP containing thermoplastic resin particles [Ec] in the carbon fiber layers may have low tensile strength and low impact resistance, slit processing of the prepreg is preferably carried out using a prepreg containing thermoplastic resin particles [Ep] on the surface so as to allow the presence of thermoplastic resin particles [Ec] in the interlayer.

The content of the thermoplastic resin particles [Ep] used in the prepreg of the present invention is preferably not less than 1 part by mass, more preferably not less than 2 parts by mass, still more preferably not less than 3 parts by mass with respect to 100 parts by mass of the epoxy resin [Bp]. In cases where the content is within this range, the impact resistance can be improved. On the other hand, from the viewpoint of decreasing the interlayer thickness in order to increase the conductive paths in the interlayer, the content is preferably less than 10 parts by mass, more preferably less than 7 parts by mass, still more preferably less than 5 parts by mass.

In the prepreg of the present invention, the thermoplastic resin particles [Ep] are preferably present near the surface of the prepreg. Specifically, when the thickness of the prepreg is taken as 100%, the particles are present within a depth range of preferably 20%, more preferably 10% from the surface of the prepreg. In an observed image of a cross-section obtained by cutting the CFRP in the thickness direction at an arbitrary position, the ratio of the particles present within the depth range described above with respect to the total amount of the particles is preferably not less than 85% by area, more preferably not less than 92% by area, still more preferably not less than 97% by area. The presence of the particles within this range may be judged by immobilizing the particles by curing, observing a cross-section of the CFRP, and determining the ratio of the total area of the particles present within the above-described depth range with respect to the total area of all observable particles, which is taken as 100% by area. The thermoplastic resin particles [Ec] are capable of maintaining high tensile strength and high impact resistance, and also high lightning resistance of the carbon fiber layers, in cases where the particles are placed in a large amount only in the interlayer. Therefore, it is important to reduce entrance of the particles into the carbon fiber layers. In view of this, at the stage of the prepreg, not only the thermoplastic resin particles [Ep], but also the later-described conductive particles whose primary particles have an individual particle diameter of not less than 1 µm [Gp], are preferably placed near the surface. In particular, at the stage of the production of the prepreg, when the epoxy resin [Bp], the aromatic polyamine compound [Cp], and the thermoplastic resin having a polyarylether backbone [Dp] are heated and pressurized to impregnate them into the bundles of the carbon fibers [A], entrance of part of the thermoplastic resin particles [Ep] and the conductive particles [Gp] together with the epoxy resin [Bp], the aromatic polyamine compound [Cp], and the thermoplastic resin having a polyarylether backbone [Dp] as illustrated in Fig. 7 causes disturbance of the array along the route. Such disturbance is not preferred since it remains even after the preparation of the CFRP by curing of the prepreg. Further, as described later, prepregs containing the conductive particles [Gp] or the conductive nanofiller [Fp] in the carbon fiber layer also have poor slit processability. Examples of the means to place thermoplastic resin particles [Ep] near the surface include control of the range of D10 in the particle diameter distribution of the thermoplastic resin particles [Ep] or the conductive nanofiller [Fp], and use of a two-step impregnation hot-melt process in the production of the prepreg as described later.

In order to allow the thermoplastic resin particles [Ep] used in the prepreg of the present invention to be present within the depth range described above with respect to the thickness of the prepreg, which is taken as 100%, D10 in the particle diameter distribution of the thermoplastic resin particles [Ep] is preferably not less than 3 µm, preferably not less than 6 µm, still more preferably not less than 10 µm. In cases where D10 in the particle diameter distribution is within the range described above, entrance of particles into gaps between bundles of the carbon fibers [A] can be suppressed at the stage of the production of a prepreg obtained using common carbon fibers. Therefore, the particles can be allowed to be present within a depth range of 20% from the surface of the prepreg. Since the particles generally have a particle diameter distribution, and may include a large amount of small particles even in cases where the average particle diameter is large, D10 in the particle diameter distribution is preferably within the range described above. On the other hand, since the particles in the CFRP preferably exhibit an effect that improves the impact resistance, there preferably remains a room that allows deformation of the particles when they receive an impact. For example, in cases where 30-µm particles are squashed to 10 µm during the spring back, the particles in the squashed state have only a small room to undergo deformation. Therefore, only a low level of impact can be absorbed, and hence the impact resistance tends to be low. Thus, D90 in the particle diameter distribution in terms of the volume average is preferably not more than 50 µm, more preferably less than 30 µm. Here, D10 or D90 in the particle diameter distribution means the particle diameter at the point where the cumulative frequency of the individual particle diameter reaches 10% or 90% by volume, respectively. D50 in the particle diameter distribution below is the particle diameter at the point where the cumulative frequency reaches 50%. The calculation of D10, D50, and D90 in the particle diameter distribution is carried out only with particles having an individual particle diameter of not less than 1 µm. Particles having a particle diameter of less than 1 µm are not included in the calculation since they do not disturb the array of the carbon fibers. In the present invention, particles having an individual particle diameter of less than 1 µm are defined as a nanofiller, which will be described later.

The method of producing the prepreg of the present invention is preferably, but does not necessarily need to be, the hot-melt process. The hot-melt process is a method in which a matrix resin is impregnated into reinforcing fibers by reducing the viscosity of the matrix resin by heating rather than by the use of a solvent. Examples of the hot-melt process include a method in which a matrix resin whose viscosity has been reduced by heating is directly impregnated into reinforcing fibers, and a method in which a release paper sheet having a resin film thereon is once prepared by applying a matrix resin to release paper or the like, and then the prepared release paper sheet is layered on one or both sides of reinforcing fibers, followed by heating and pressurizing the resulting laminate to allow impregnation of the matrix resin into the reinforcing fibers. The latter method is preferred since the impregnation can be achieved while the thermoplastic resin particles [Ep] are retained near the surface during the resin impregnation.

The method of producing the prepreg of the present invention by the hot-melt process is not limited, and examples of the method include the one-step impregnation hot-melt process and the multi-step impregnation hot-melt process. In cases where the prepreg is produced by the one-step impregnation hot-melt process, the particles are more likely to enter the carbon fiber layers compared to the multi-step impregnation hot-melt process. Therefore, the prepreg can be produced more effectively by the present production method since the method uses thermoplastic resin particles [Ep] whose D10 is within the range described above and which can be squashed during the spring back. In the one-step impregnation hot-melt process, a resin film containing: the epoxy resin [Bp], the aromatic polyamine compound [Cp], the thermoplastic resin having a polyarylether backbone [Dp], the thermoplastic resin particles [Ep], and the conductive nanofiller [Fp], which are components of the present invention; and also containing, when necessary, conductive particles [Gp] of not less than 1 µm, and the like; is applied under heat and pressure to one or both sides of the carbon fibers [A] that are a component, to achieve the impregnation in one step. In cases where the one-step impregnation is carried out using conductors having a size of not less than 11 µm according to a conventional technique, conductors that have entered the carbon fiber layers serve as the origins of cracks, and hence the tensile strength and the impact resistance tend to decrease. On the other hand, the production method of the present invention can be said to be a more useful method even in cases where the one-step impregnation hot-melt process is used, since D10 of the thermoplastic resin particles is controlled such that the particles do not enter the carbon fiber layers, and since the thermoplastic resin particles are squashed during the spring back at the time of the pressurization and heating to control the interlayer thickness.

In order for the CFRP of the present invention to have high lightning resistance, conductive paths need to be formed in the thickness direction in the interlayer, and control of the interlayer thickness is important. For this purpose, the amount of the particles to be included in each interlayer is preferably determined such that a space is secured to allow thermoplastic resin particles [Ep] having a large individual particle diameter to be squashed during the spring back. In cases where the amount of the particles in the CFRP as a whole is to be judged, it may be based on the content of the thermoplastic resin particles [Ec] relative to the content of the matrix resin [BCDc]. However, in cases where the amount is to be determined for each interlayer, the content (areal weight) of the carbon fibers [A] is included in the calculation equation taking into account the fact that an increase in the areal weight of the carbon fibers [A] means a decrease in the number of interlayers, and hence means an increase in the amount of the thermoplastic resin particles [Ec] in each interlayer. Thus, design of the prepreg for the preparation of the CFRP of the present invention may be determined according to the value calculated by the following Formula (1): {W[A] × (W[Ep] × mass ratio of first resin + W[EP2] × mass ratio of second resin)} / {(W[Bp1] + W[Cp1] + W[Dp1]) × mass ratio of first resin + (W[BP2] + W[Cp2] + W[Dp2]) × mass ratio of second resin} (wherein the content (areal weight) of the carbon fibers [A] as a component is W_{[A]}; the contents (in parts by mass) of the epoxy resin [Bp], the aromatic polyamine compound [Cp], the thermoplastic resin having a polyarylether backbone [Dp], and the thermoplastic resin particles [Ep] as components in the resin for the first impregnate prepreg are W_{[Bp1]}, W_{[Cp1]}, W_{[Dp1]}, and W_{[Ep1]}, respectively; and the contents (in parts by mass) of the epoxy resin [Bp], the aromatic polyamine compound [Cp], the thermoplastic resin having a polyarylether backbone [Dp], and the thermoplastic resin particles [Ep] as components in the resin film for the second impregnate prepreg are W_{[Bp2]}, W_{[Cp2]}, W_{[Dp2]}, and W_{[Ep2]}, respectively).

In Formula (1), in a case of one-step impregnation without the second resin, the calculation is performed assuming a mass ratio of 1 for the first resin, and a mass ratio of 0 for the second resin.

Here, the prepreg may contain conductive particles having an individual particle diameter of not less than 1 µm [Gp], inorganic particles such as flame retardants, or the like as particles insoluble in the epoxy resin [Bp], other than the thermoplastic resin particles [Ep]. However, for the current aircraft, inclusion of a large amount of particles insoluble in the epoxy resin [Bp] other than thermoplastic resin particles is unlikely, so that the conductive particles having an individual particle diameter of not less than 1 µm [Gp], the inorganic particles such as flame retardants, and the like do not need to be taken into account in Formula (1).

The value according to Formula (1) is preferably less than 60, more preferably less than 45, still more preferably less than 30. On the other hand, from the viewpoint of maintaining the compression ratio after impact within an excellent range, the value according to Formula (1) is preferably not less than 5, more preferably not less than 10, still more preferably not less than 20.

The multi-step impregnation hot-melt process is a method in which the raw materials for the preparation of the matrix resin are impregnated, in multiple separate steps, into the carbon fibers [A] that are a component, from one or both sides thereof under heat and pressure. In the multi-step impregnation hot-melt process, a prepreg formed by lamination of different kinds of matrix resins can be produced by multi-step hot-melting. However, as the number of times of the lamination increases, the production cost increases. Thus, taking into account both the lamination of a plurality of kinds of resins and the production cost, a more preferred method is the so-called two-step impregnation hot-melt process, in which the raw materials for the preparation of the matrix resin are impregnated, in two separate steps, into the carbon fibers [A] that are a component, from one or both sides thereof under heat and pressure. The two-step impregnation hot-melt process is more preferably carried out as follows. First, a prepreg precursor (hereinafter referred to as first impregnate prepreg) is obtained by impregnating a first resin film containing the epoxy resin [Bp], the aromatic polyamine compound [Cp], and the thermoplastic resin having a polyarylether backbone [Dp] as components of the first impregnate prepreg, and also containing, when necessary, the conductive nanofiller [Fp], into the carbon fibers [A] that are a component, from one or both sides thereof. Subsequently, a resin film for the second impregnate prepreg, containing the epoxy resin [Bp], the aromatic polyamine compound [Cp], the thermoplastic resin having a polyarylether backbone [Dp], the thermoplastic resin particles [Ep], and the conductive nanofiller [Fp] is attached to one or both sides of the prepreg precursor, to obtain a prepreg. The first resin film has relatively low viscosity from the viewpoint of promoting its impregnation into the carbon fiber bundles, and has a composition containing the components of the resin for the first impregnate prepreg, in which the thermoplastic resin particles [Ep] and the conductive particles of not less than 1 µm [Gp] are not included. After impregnating the resin into the carbon fiber bundles, the resin film for the second impregnate prepreg, containing the thermoplastic resin particles [Ep], is attached to the surface of the first impregnate prepreg impregnated with the resin for the first impregnate prepreg. By this, a prepreg in a preferred form in which the thermoplastic resin particles [Ep] and the conductive particles of not less than 1 µm [Gp] are placed only on the surface can be obtained. For the raw materials to be included in the resin for the first impregnate prepreg and the components included in the resin for the second impregnate prepreg, the content of each raw material in the resin for the first impregnate prepreg and the content of each component in the resin for the second impregnate prepreg are distinguished from each other as follows. The contents (in parts by mass) of the epoxy resin [Bp], the aromatic polyamine compound [Cp], the thermoplastic resin having a polyarylether backbone [Dp], and the thermoplastic resin particles [Ep] as components in the resin for the first impregnate prepreg are represented as W_{[Bp1]}, W_{[Cp1]}, W[Dp1], and W[Ep1], respectively, and the contents (in parts by mass) of the epoxy resin [Bp], the aromatic polyamine compound [Cp], the thermoplastic resin having a polyarylether backbone [Dp], and the thermoplastic resin particles [Ep] as components in the resin for the second impregnate prepreg are represented as W[Bp2], W[Cp2], W[Dp2], and W[Ep2], respectively.

In cases where the prepreg of the present invention is produced by the hot-melt process, the resin composition to be impregnated into the carbon fiber bundles preferably has a viscosity of 0.1 Pa s to 100 Pa s at 50°C. The viscosity of the resin composition to be impregnated herein means the viscosity of the resin composition corresponding to the first resin in the case of the multi-step impregnation hot-melt process, including the two-step impregnation. In cases where the viscosity of the resin composition to be impregnated into the carbon fiber bundles is not less than 0.1 Pa s, not less than 0.2 Pa s, or not less than 0.5 Pa s, a (first impregnate) prepreg having a uniform array without disturbance can be produced. On the other hand, the viscosity of the resin composition to be impregnated into the carbon fiber bundles is preferably not more than 100 Pa·s, more preferably less than 50 Pa·s, still more preferably less than 10 Pa·s. In such cases, the array of the carbon fiber bundles is not disturbed even during the transportation in the state of the prepreg, and the obtained prepreg can suppress formation of voids in the preparation of the CFRP.

In spite of the fact that the CFRP of the present invention contains the thermoplastic resin particles [Ec] in the interlayer 3, it has a low aspect ratio in the thickness direction. The thickness of the interlayer 3 is preferably not more than 30 µm, more preferably less than 20 µm, still more preferably less than 12 µm. In cases where the thickness is within this range, formation of the conductive paths can be relatively easily achieved with the conductive nanofiller alone, and higher conductivity and higher tensile strength can be maintained compared to cases where conductors having a large diameter are used. Regarding the lower limit, the thickness is preferably not less than 3 µm, more preferably not less than 5 µm, still more preferably not less than 8 µm. In cases where the thickness is not less than the lower limit, the thermoplastic resin particles [Ec] can be said to be present without undergoing dissolution, so that high impact resistance can be achieved.

### 3. Conductive Material (B)

The CFRP of the present invention is characterized in that the conductive nanofiller [Fc] forms conductive paths between the carbon fibers on the upper and lower sides of the interlayer.

In a solution of the epoxy resin [Bp] and the like, conductive nanofillers [Fc] and [Fp], such as carbon black, are usually present in a state where structures are formed by aggregation of a plurality of primary particles, rather than in a state where primary particles are individually dispersed. In the resin film and the prepreg, the conductive nanofiller [Fc] is in the state of structures. At the time of the formation of the CFRP, a plurality of these structures are connected to each other (the substance formed by connection of the plurality of structures may be hereinafter referred to as aggregate). The aggregate is thought to be formed by a process in which, when the structures flow together with epoxy during the curing of the prepreg, the structures contact carbon fibers and the like, resulting in aggregation the structures at the site of the contact. For the formation of the conductive paths between the carbon fiber layers on the upper and lower sides of the interlayer, the size of each structure is preferably large. Specifically, it is important for the structures of the conductive nanofillers [Fc] and [Fp] to have a size of not less than 0.6 µm in the interlayer. The structure size is preferably not less than 0.8 µm, more preferably not less than 1.1 µm. In cases where the structure size is large, the structures are more likely to aggregate together and to be connected to each other, so that the conductive paths are more likely to be formed, leading to improved lightning resistance. The structure size of the conductive nanofillers [Fc] and [Fp] is preferably less than 10 µm, more preferably less than 5 µm, still more preferably less than 3 µm. In cases where the structure size is within the preferred range, the structures of the conductive nanofillers [Fc] and [Fp] are less likely to serve as the origins of fracture, so that decreases in the tensile strength and the impact resistance can be prevented.

On the other hand, an important factor to be considered in the determination of the structure size of the conductive nanofillers [Fc] and [Fp] in the carbon fiber layers is the effect that allows formation of conductive paths between carbon fibers [A]. In view of this, the structure size may be smaller than that in the interlayer described above. Specifically, the structure size of the conductive nanofillers [Fp] and [Fc] in the carbon fiber layers is preferably not less than 0.1 µm, more preferably not less than 0.15 µm, still more preferably not less than 0.2 µm. Regarding the upper limit, the structure size is preferably less than 0.8 µm, more preferably less than 0.6 µm, still more preferably less than 0.4 µm. Here, the structure size of the conductive nanofillers [Fc] and [Fp] is determined by transmission electron microscopy (TEM). The structure size is a value obtained by observing the 100 structures having the largest sizes in an image, and subjecting each structure to measurement of the distance in the direction of the longest part, followed by calculating the average.

The following illustrates an example of a method for controlling the structure size of the component conductive nanofillers [Fc] and [Fp] within the range described above. However, the method is not limited thereto. First, part of the epoxy resin [Bp] is mixed with the conductive nanofiller [Fp], to obtain a mixture [BFp] (the so-called master batch) containing the conductive nanofiller [Fp] at high concentration. Thereafter, the structure size of the conductive nanofiller [Fp] is adjusted in the state of the master batch, and then this master batch is diluted with the remaining epoxy resin [Bp], to obtain a master batch [BFp] containing the epoxy resin [Bp] and the conductive nanofiller [Fp] at a designed ratio. In order to facilitate application of shearing, the ratio between the epoxy resin [Bp] and the conductive nanofiller [Fp] in the master batch is preferably set such that the concentration of the conductive nanofiller [Fp] is rather high. The ratio is preferably about 80:20 to 40:60, more preferably about 70:30 to 50:50 in terms of the mass ratio. At the stage when the conductive nanofiller [Fp] is mixed at high concentration with the epoxy resin [Bp], the conductive nanofiller [Fp] is in the form of aggregates as illustrated in Fig. 8. In conventional cases, the mixture is stirred to allow formation of structures by the conductive nanofiller [Fp] (Preparation Example 2 in Fig. 8). However, it was found that application of shearing to this mixture increases the structure size of the conductive nanofiller [Fp] compared to the conventional cases. This is thought to be due to the fact that once shearing is applied to make the aggregates into the dispersed state, reaggregation occurs due to surface tension after the mixture is left to stand, resulting in a larger structure size (Preparation Example 1 in Fig. 8) compared to the cases where the mixture is simply stirred. Possible examples of the means of application of the shearing include planetary-type or rotation-type mixers such as planetary mixers; single-screw extruders; and multi-screw extruders such as twin-screw extruders. A plurality of these means may be used, or one of these means may be used a plurality of times. In order to maintain a large structure size of the conductive nanofiller [Fp], it would be appropriate to limit the application of the shearing to about one time of use of a mixer.

The average particle diameter of the primary particles of conductive nanofiller [Fp] is a factor that controls the structure size of the conductive nanofiller [Fp]. The average particle diameter of the primary particles of the conductive nanofiller [Fp] is preferably selected in accordance with the desired structure size of the conductive nanofiller [Fp]. In cases where the primary particles have a small average particle diameter, the specific surface area increases to promote the aggregation, so that the conductive nanofiller [Fp] tends to have a large structure size. The average particle diameter of the primary particles of the conductive nanofiller [Fp] is preferably not more than 50 nm, preferably less than 30 nm, more preferably less than 20 nm. In cases where the average particle diameter is within this range, the structure size of the conductive nanofiller [Fp] can be increased. Regarding the lower limit, the average particle diameter of the primary particles of the conductive nanofiller [Fp] is preferably not less than 5 nm, more preferably not less than 10 nm, still more preferably not less than 15 nm. In cases where the average particle diameter is within this preferred lower-limit range, a greater ease of handling can be maintained. The average particle diameter of primary particles of the conductive nanofiller is defined as the average particle diameter based on measurement of the individual particle diameters of not less than 100 primary particles by transmission electron microscopy. Here, as described above, the nanofiller is defined as particles having an individual particle diameter of less than 1 µm. Therefore, particles of not less than 1 µm are not included in the calculation of the average particle diameter of the primary particles. Particles having an individual particle diameter of not less than 1 µm are classified as the conductive particles [Gc] or the conductive particles [Gp] described later. In cases where both conductive particles having an individual particle diameter of not less than 1 µm and conductive particles having an individual particle diameter of less than 1 µm are included, they are represented as [FGc] or [FGp]. [FGp] has the effects of both [Fp] and [Gp], and [FGc] has the effects of both [Fc] and [Gc].

When the prepreg is heated and pressurized, the structures of the conductive nanofiller [Fp] flow together with the epoxy resin [Bp], the aromatic polyamine compound [Cp], and the thermoplastic resin having a polyarylether backbone [Dp]. By this, the carbon fibers [A] may be connected to each other; the carbon fibers [A] may be connected to the conductive particles having a particle diameter of not less than 1 µm [Gp] (Symbol 6 in Fig. 5); and in addition, the structures may be bound to each other to form aggregates. The binding between the structures is known to be more likely to occur such that they are bound in the longitudinal direction rather than forming spherical aggregates. An image of an aggregate of the structures of the conductive nanofiller [Fp] is illustrated in Fig. 9. By the increase in the structure size, the size of the aggregate also increases, which enables connection of the carbon fibers on the upper and lower sides to each other across the interlayer. Thus, the CFRP obtained by curing of the prepreg can have high lightning resistance.

The material of the conductive nanofiller [Fp] constituting the prepreg of the present invention is not limited. Examples of the material include carbon, graphite, nickel, gold, platinum, palladium, silver, copper, and cobalt. Among these, carbon is preferred. Examples of the material for the carbon include carbon materials such as carbon nanofibers, carbon nanohorns, carbon nanocones, carbon nanotubes, carbon nanocoils, carbon microcoils, carbon nanowalls, carbon nanochaplets, fullerenes, carbon black, graphite, graphene, carbon nanoflakes, and derivatives thereof. One of nanofillers composed of these carbon materials may be used alone, or two or more of such nanofillers may be used in combination. Regarding the shape, the aspect ratio is preferably low. The aspect ratio is preferably not more than 100, more preferably less than 10, still more preferably less than 2. In view of this, carbon black is preferred. Examples of the type of the carbon black include furnace black, hollow furnace black, acetylene black, and channel black. Furnace black is preferred. The [Fc] contained in the CFRP obtained by curing the prepreg containing [Fp] may be regarded as the same as the [Fp] in terms of the shape, for example, the particle diameter and the aspect ratio. However, the [Fc] has aggregate structures formed at the stage of the curing.

When the prepreg of the present invention is produced by the hot-melt two-step impregnation method, the conductive nanofiller may be included in both the first resin film and the second resin film by, for example, including the conductive nanofiller [Fp] in the first resin film and also including the conductive nanofiller [Fp] in the second resin film. Alternatively, the conductive nanofiller [Fp] may be included only in the second resin film, without including the conductive nanofiller in the first resin film. In cases where the conductive nanofiller is included in both the first resin film and the second resin film, the structure size of the conductive nanofiller [Fp] included in the second resin film is preferably not less than 0.6 µm, and the structure size of the conductive nanofiller [Fp] included in the first resin film is preferably not less than 0.1 µm and less than 0.5 µm. The structure size of the conductive nanofiller [Fp] included in the first resin film is more preferably not less than 0.12 µm and less than 0.4 µm, still more preferably not less than 0.15 µm and less than 0.3 µm. The conductive nanofiller [Fp] included in the second resin film is more effective for forming conductive paths between the upper and lower sides of the interlayer. On the other hand, the conductive nanofiller [Fp] included in the first resin film effectively enters a carbon fiber layer to form conductive paths between carbon fibers [A] in the same carbon fiber layer. Therefore, the structure size of the conductive nanofiller [Fp] included in the first resin film is preferably smaller than the structure size of the conductive nanofiller [Fp] included in the second resin film so that the former nanofiller can enter the carbon fiber layers. By this, conductive paths can be formed in the interlayer between the carbon fiber layers, and in addition, the carbon fiber layers can have more conductive paths, so that the conductivity can be increased to improve the lightning resistance. Also from the viewpoint of suppression of fuzz generation during the slit processing, the structure size of the conductive nanofiller [Fp] included in the first resin film is preferably less than 0.5 µm.

In cases where the conductive nanofiller [Fp] is included in the second resin film, the conductive nanofiller [Fp] may be dispersed in the entire second resin film, or masses of a master batch [BCFp] of the conductive nanofiller [Fp] may be locally placed. In cases where the master batch [BCFp] is prepared into the masses, the masses may be shaped by stencil printing, screen printing, or the like into the form of dots, followed by semi-curing the epoxy resin [Bp] and the aromatic polyamine compound [Cp] in the second resin film by heat treatment to an extent at which they are solidified at room temperature. By this, the master batch [BCFp] can be easily handled, which is preferred. In cases where the master batch [BCFp] is prepared into the masses, the conductive nanofiller [Fp] is present only in the mass portions unlike the case where the conductive nanofiller [Fp] is dispersed in the entire second resin film. This is advantageous since the content of the conductive nanofiller [Fp], which is expensive, can be reduced to reduce the cost, and since the slit processability can be improved due to occurrence of sites containing the conductive nanofiller [Fp] and sites not containing the conductive nanofiller [Fp] as described later. Possible examples of the method of locally placing the masses of the master batch [BCFp] include a method in which the masses are kneaded with the other components of the second resin film such as the epoxy resin [Bp], the aromatic polyamine compound [Cp], the thermoplastic resin having a polyarylether backbone [Dp], and the thermoplastic resin particles [Ep], a method in which the other components of the second resin film such as the epoxy resin [Bp], the aromatic polyamine compound [Cp], the thermoplastic resin having a polyarylether backbone [Dp], and the thermoplastic resin particles [Ep] are prepared into a resin film, followed by spraying of the master batch [BCFp], and a method in which the master batch [BCFp] is printed in the form of dots on release paper or the like, and then the release paper is stacked on the resin film to allow transfer of the master batch [BCFp].

The content of the conductive nanofiller [Fp] constituting the prepreg of the present invention is preferably within the range of 0.5 to 15.0 parts by mass, more preferably within the range of 2.0 to 10.0 parts by mass, still more preferably within the range of 4.0 to 7.0 parts by mass with respect to 100 parts by mass of the epoxy resin [Bp]. In cases where the amount of the conductive nanofiller [Fp] contained is within such a range, a favorable balance can be achieved between the conductivity and the mechanical and physical properties of the resulting CFRP. Further, in cases where the multi-step impregnation hot-melt process described above is used, the conductive nanofiller [Fp] can be included in minimum necessary amounts at necessary sites, which is preferred. On the other hand, the conductivity of the interlayer between the carbon fibers can be increased by increasing the content of the conductive nanofiller [Fp] in the resin composition located on the outermost surface of the prepreg. However, since a decrease in the tackiness also needs to be prevented, the content is preferably adjusted taking the balance between these into account. In the case of the two-step impregnation hot-melt process, the content of the conductive nanofiller [Fp] with respect to 100 parts by mass of the epoxy resin [Bp] in the second resin film is preferably not less than 1 part by mass, more preferably not less than 3 parts by mass, still more preferably not less than 5 parts by mass. Regarding the upper limit, the content is preferably not more than 20 parts by mass, more preferably less than 15 parts by mass, still more preferably less than 10 parts by mass.

The CFRP and the prepreg of the present invention may also contain particles having an individual particle diameter of not less than 1 µm, especially conductive particles [Gc] or [Gp] having an individual particle diameter equivalent to the interlayer thickness, as long as the effect of the present invention is not deteriorated. Examples of the material constituting the [Gc] and the [Gp] include, but are not limited to, carbon, graphite, nickel, gold, platinum, palladium, silver, copper, and cobalt. Particles prepared by coating thermoplastic resin particles with those materials may also be used. From the viewpoint of formation of the conductive paths, the individual particle diameter of the conductive particles [Gc] and [Gp] is preferably equivalent to or larger than the interlayer thickness. Specifically, D50 in the particle diameter distribution is preferably not less than 11 µm, preferably not less than 15 µm, still more preferably not less than 20 µm. Regarding the upper limit, D50 in the particle diameter distribution is preferably not more than 50 µm, preferably less than 30 µm, more preferably less than 25 µm. The conductive particles [Gc] and [Gp] basically do not form structures, and the [Gc] contained in the CFRP obtained by curing the prepreg containing [Gp] may be regarded as the same as the [Gp] in terms of the shape, for example, the particle diameter and the aspect ratio. Although the conductive particles [Gc] and [Gp] can be factors that reduce the tensile strength and the impact resistance as described above, they have larger volumes compared to those of the conductive nanofillers [Fc] and [Fp]. Therefore, the conductive particles [Gc] and [Gp] can allow a relatively large amount of electric current to flow. Thus, in cases where they are placed in the interlayer, a structure that allows the electric current to flow without interruption can be formed by providing fine conductive paths like spokes without forming gaps by submicron structures composed of the conductive nanofillers [Fc] and [Fp] contained in the second resin film, and at the same time, a small amount of conductive particles [Gc] in the second resin film can serve as a hub to allow extensive electric conduction. The conductive particles [Gp] are effective even in cases where they are contained only in a small amount. Regarding the range in which their effect can be easily produced, the content of the conductive particles [Gp] is preferably not less than 0.2 part by mass, more preferably not less than 1 part by mass, still more preferably not less than 1.5 parts by mass with respect to 100 parts by mass of the epoxy resin [Bp]. Regarding the upper limit from the viewpoint of maintaining the tensile strength and the impact resistance, the content of the conductive particles [Gp] is preferably less than 5 parts by mass, more preferably less than 3 parts by mass, still more preferably less than 2 parts by mass. In this case, a master batch [BCFGp] containing both the [Fp] and the [Gp] is preferably prepared in advance. As the conductive particles, the [Fp] and the [Gp] may be separately provided, or particles [FGp] containing both conductive particles having an individual particle diameter of less than 1 µm and conductive particles having an individual particle diameter of not less than 1 µm may be provided. Further, masses of the master batch [BCFGp] for the second resin film may be locally placed. By the local placement of the masses of the master batch, the width accuracy at the time of cutting of the prepreg can be increased, and a highly conductive CFRP can be obtained by curing. On the other hand, in cases where conductive particles [Gp] are present in the carbon fiber layers, fuzz generation is likely to occur at the time of cutting of the carbon fibers as illustrated in Fig. 5. Thus, conductive particles [Gp] are preferably absent in the carbon fiber layers (see below). Therefore, conductive particles [Gp] are preferably not included in the so-called first resin, and, even in cases where conductive particles [Gp] are added to the second resin, it is preferred to use large particles so as to prevent entrance of the conductive particles [Gp] into the carbon fiber layers. D50 in the particle diameter distribution of the conductive particles [Gp] is thus preferably not less than 11 µm. Further, even in cases where the conductive particles [Gp] included in the second resin film have entered the carbon fiber layers, fuzz generation is less likely to occur in cases of entrance of a small number of large particles than in cases of entrance of a large number of small particles when the same volume and weight are assumed for both particles. Thus, D50 in the particle diameter distribution of the conductive particles [Gp] is thus preferably not less than 11 µm. Similarly to the [Gp], the particles [FGp] containing both conductive particles having an individual particle diameter of less than 1 µm and conductive particles having an individual particle diameter of not less than 1 µm preferably do not enter the carbon fiber layers.

### 4. Effect, and Method of Use of Present Invention

The CFRP of the present invention is characterized by its high lightning resistance. The volume resistivity in the thickness direction is preferably not more than 50 Ωcm, more preferably not more than 30 Qcm, still more preferably not more than 15 Qcm. In cases where the volume resistivity does not exceed this range, the CFRP can be said to have high conductivity, and to have a structure that allows an electric current to flow without interruption upon application of the electric current by a lightning strike or the like since the interlayer does not serve as an insulating layer. Further, in cases where the conductive nanofiller [Fp] is dispersed throughout the second resin in the CFRP of the present invention, conductive paths are formed at short intervals in the surface direction by aggregates of submicron structures formed by connection of the conductive nanofillers [Fc] and [Fp]. Therefore, unlike CFRPs using conductors of not less than 11 µm that have been conventionally developed, the presence of sites where the electric current is locally interrupted can be avoided because of the shorter intervals between the conductive paths, and the CFRP of the present invention tends to have higher lightning resistance than those of the CFRPs using conductors of not less than 11 µm even with the same volume resistivity. On the other hand, in cases where the masses of the conductive nanofiller are locally placed, the width accuracy at the time of cutting of the prepreg tends to be high.

The carbon fibers [A] used in the CFRP and the prepreg of the present invention preferably have a high tensile modulus in order to increase the tensile strength of the CFRP. Basically, the tensile modulus of the carbon fibers is preferably not less than 200 GPa, more preferably not less than 230 GPa, still more preferably not less than 250 GPa. Although there is no upper limit, the tensile modulus is preferably not more than 440 GPa, more preferably not more than 400 GPa. In cases where the tensile modulus does not exceed this preferred upper limit, a decrease in the tensile elongation can be prevented. Two or more types of the carbon fibers [A] may be used, and the carbon fibers [A] may be used in combination with other reinforcing fibers. Examples of the other reinforcing fibers include glass fibers, aramid fibers, boron fibers, PBO fibers, high-strength polyethylene fibers, alumina fibers, and silicon carbide fibers.

The tensile elongation of the carbon fibers [A] used in the CFRP and the prepreg of the present invention is preferably not less than 0.8%, more preferably not less than 1.0%, still more preferably not less than 1.2%. In cases where the carbon fibers [A] have high tensile elongation, they are less likely to fracture, so that the tensile strength of the CFRP increases. In the above-described CFRPs using conductors that have been conventionally used, application of tensile stress may cause interfacial delamination between the conductors and the matrix resin [BCDc] regardless of the tensile elongation of the carbon fibers, leading to the formation of an origin of breakage. In contrast, in the CFRP of the present invention, use of conductors other than the conductive nanofiller can be avoided, and in this case, the tensile elongation of the carbon fibers [A] can be effectively utilized. The high tensile elongation also improves the impact resistance. Although there is no upper limit of the tensile elongation, the tensile modulus tends to be low in cases where the tensile elongation is too high. Thus, the tensile elongation is within the range of preferably not more than 3.0%, more preferably less than 2.5%.

Here, the tensile modulus and the tensile elongation of the carbon fibers [A] are values measured according to JIS R 7601 (2006).

In the carbon fibers [A] used in the CFRP and the prepreg of the present invention, the number of filaments in each bundle of the carbon fibers [A] is preferably within the range of 1000 to 50,000. In cases where the number of filaments is less than 1000, the fiber array tends to be tortuous, causing a decrease in the strength. The number of filaments is more preferably within the range of 2500 to 40,000, which is especially preferred for use in aerospace applications.

Examples of commercially available products of the carbon fibers [A] include "TORAYCA" (registered trademark) T800S-24K, "TORAYCA" (registered trademark) T800G-24K, "TORAYCA" (registered trademark) T1100G-24K, "TORAYCA" (registered trademark) Cloth CO6343 (carbon fibers: T300-3K), and "TORAYCA" (registered trademark) Cloth CK6244C (carbon fibers: T700S-12K).

In order to utilize the specific strength and the specific elastic modulus of the carbon fibers to obtain a high tensile strength, the mass ratio of the carbon fibers [A] in the CFRP and the prepreg of the present invention is preferably not less than 60% by mass, more preferably not less than 62% by mass, still more preferably not less than 65% by mass. In cases where the mass ratio of the carbon fibers [A] is too high, voids tend to be formed between bundles of the carbon fibers [A]. In order to suppress the voids, the mass ratio is preferably not more than 80% by mass, more preferably less than 75% by mass, still more preferably less than 70% by mass.

In the CFRP of the present invention, the tensile strength of the carbon fibers [A] can be utilized at a high utilization rate. In cases where the carbon fibers have a one-directional array, the tensile strength property can be evaluated by measurement of the 0° tensile strength. The 0° tensile strength in the CFRP varies depending on the tensile strength of the carbon fibers [A]. In cases where carbon fibers [A] at the time of the present invention are used, a CFRP with a performance of as high as not less than 2850 MPa, not less than 2950 MPa, or not less than 3050 MPa can be produced. The tensile strength property can be evaluated by measurement of the 0° tensile strength. In the measurement of the 0° tensile strength of the CFRP, as described in JIS K 7017 (1999), the fiber direction of a one-directional CFRP is regarded as the axis direction, and this direction is defined as the 0° axis. The direction perpendicular to the axis is defined as 90°. According to the specification in JIS K 7073 (1988), a 0° tensile test is carried out at room temperature (23°C).

The following describes specific examples of the production of the matrix resin [BCDc] that constitutes the CFRP of the present invention, by way of examples in which a prepreg containing a thermosetting resin used in the current stage of the aerospace field is cured. As described above, the prepreg of the present invention contains an epoxy resin [Bp], an aromatic polyamine compound [Cp], and a thermoplastic resin having a polyarylether backbone [Dp]. By mixing these together, and applying pressure and heat thereto, a favorable matrix resin [BCDc] can be obtained as a cured product in which the thermoplastic resin having a polyarylether backbone [Dp] is dissolved in a polymer of the epoxy resin [Bp] and the aromatic polyamine compound [Cp]. The composition examples described below are mainly composition examples suitable for obtaining the CFRP of the present invention under curing conditions used in the current stage of aerospace applications. However, the composition is not limited to those described below.

The epoxy resin [Bp] constituting the prepreg of the present invention preferably contains a tetrafunctional epoxy resin. The tetrafunctional epoxy resin is a resin containing not less than four epoxy groups in one molecule, and is preferably in the form of a liquid at 23°C. Specific examples of the tetrafunctional epoxy resin include tetraglycidyl diaminodiphenylmethane (TGDDM), halogen-substituted derivatives thereof, alkyl-substituted derivatives thereof, aralkyl-substituted derivatives thereof, and hydrogenation products thereof. By the inclusion of such a tetrafunctional epoxy resin, a three-dimensional network structure can be formed by the molding, so that the free volume pore radius can be reduced. Therefore, a CFRP having high heat resistance, high compressive properties, and the like required in aerospace applications can be obtained.

The epoxy resin [Bp] preferably contains a component with which the difference between the maximum value and the minimum value of the free volume pore radius tends to become not less than 0.09 nm in the CFRP after molding and curing. For this purpose, an asymmetric epoxy and/or curing agent is/are preferably included so that a nonuniform three-dimensional network structure is likely to be formed. From such a point of view, a bifunctional epoxy resin is preferably included. Some types of bifunctional epoxy tend to form a nonuniform three-dimensional network structure. Examples of such types of bifunctional epoxy include fluorene type epoxy resins, phenol novolac type epoxy resins, cresol novolac type epoxy resins, resorcinol type epoxy resins, phenolaralkyl type epoxy resins, naphthol aralkyl type epoxy resins, dicyclopentadiene type epoxy resins, *N,N-*diglycidyl aniline, *N*,*N*-diglycidyl toluidine, and derivatives thereof. In particular, *N*,*N*-diglycidyl aniline, *N*,*N*-diglycidyl toluidine, and derivatives thereof are preferred since they are more effective.

The epoxy resin [Bp] constituting the prepreg of the present invention may also contain an epoxy resin other than those described above. A bifunctional epoxy resin suitable for required properties may be added. Preferred examples of the bifunctional epoxy resin include one or more selected from, for example, bisphenol type epoxy resins, amine type epoxy resins, phenol novolac type epoxy resins, cresol novolac type epoxy resin, resorcinol type epoxy resins, phenolaralkyl type epoxy resins, naphthol aralkyl type epoxy resins, dicyclopentadiene type epoxy resins, epoxy resins having a biphenyl skeleton, isocyanate modified epoxy resins, tetraphenylethane type epoxy resins, and triphenylmethane type epoxy resins.

Specific examples of the aromatic polyamine compound [Cp] constituting the prepreg of the present invention include diaminodiphenyl sulfone, diaminodiphenylmethane, phenylenediamine, and derivatives thereof and positional isomers thereof. The aromatic polyamine compound [Cp] is preferably 4,4'-diaminodiphenyl sulfone or 3,3'-diaminodiphenyl sulfone. 3,3'-Diaminodiphenyl sulfone is asymmetric since it has a bent structure. Therefore, the difference between the maximum value and the minimum value of the free volume pore radius as determined by positron annihilation lifetime measurement can be increased compared to 4,4'-diaminodiphenyl sulfone, and the average pore radius can be reduced. On the other hand, 4,4'-diaminodiphenyl sulfone has better moldability. Therefore, in the prepreg of the present invention, 4,4'-diaminodiphenyl sulfone is more preferably used from the viewpoint of the moldability, and, in cases where higher compression strength is required, 3,3'-diaminodiphenyl sulfone may be blended at a suitable ratio while 4,4'-diaminodiphenyl sulfone is used as the major component.

The prepreg of the present invention may contain an auxiliary curing agent such as a curing accelerator as long as the heat resistance and the thermal stability of the resin composition are not deteriorated. Examples of the auxiliary curing agent include tertiary amines, lewis complexes, onium salts, imidazole compounds, urea compounds, hydrazide compounds, and sulfonium salts. The content of the auxiliary curing agent needs to be appropriately adjusted in accordance with the type of the agent used. The content is preferably not more than 10 parts by mass, more preferably not more than 5 parts by mass with respect to 100 parts by mass of the total epoxy resin [Bp]. In cases where the curing accelerator is contained within such a range, the temperature is less likely to be uneven during the molding of the CFRP, which is preferred.

The thermoplastic resin having a polyarylether backbone [Dp], constituting the prepreg of the present invention improves mechanical properties such as the resin toughness, and also improves the microcrack resistance and the solvent resistance, depending on the amount of the resin included. Examples of thermoplastic resins having a polyarylether backbone suitable as the thermoplastic resin having a polyarylether backbone [Dp] include polysulfone, polyphenylsulfone, polyethersulfone, polyetherimide, polyphenylene ether, polyetheretherketone, and polyetherethersulfone. These are soluble in the epoxy resin [Bp] and the aromatic polyamine compound [Cp] at high temperature. These thermoplastic resins having a polyarylether backbone may be used individually, or a plurality of these resins may be used as a mixture. In particular, polyethersulfone may be preferably used since it is capable of giving toughness without deteriorating the heat resistance and the mechanical and physical properties of the resulting CFRP. Examples of commercially available products of polyethersulfone that can be suitably used as the thermoplastic resin having a polyarylether backbone [Dp] include "SUMIKAEXCEL" (registered trademark) PES 5003P (manufactured by Sumitomo Chemical Company) and "VIRANTAGE" (registered trademark) VW-10700RFP. The amount of the [Dp] included may be adjusted as required depending on the viscosity of the matrix resin, the tackiness of the prepreg, mechanical properties of the CFRP, and the like. The amount is preferably within the range of 5 to 40 parts by mass, more preferably within the range of 10 to 35 parts by mass, still more preferably within the range of 15 to 30 parts by mass with respect to 100 parts by mass of the total epoxy resin [Bp],

The CFRP of the present invention can have high impact resistance. CFRPs according to conventional techniques also contain thermoplastic resin particles to improve the impact resistance. These are particles containing as a major component a thermoplastic resin insoluble in epoxy resins, and the particles are present while maintaining their shape. Upon application of an impact, these particles undergo deformation from this shape, to achieve high impact resistance. On the other hand, in the CFRP of the present invention, the thermoplastic resin particles [Ec] have the specific aspect ratio described above in order to utilize the tensile strength of the carbon fibers at a high utilization rate. These particles are included mainly for the purpose of improving the tensile strength, and, by adjusting the amount of the particles included and the like, the impact resistance required in the current aerospace applications can be imparted to the CFRP. Further, in cases where even higher impact resistance is required, a component specialized for improvement of the impact resistance may be added as a conductive nanofiller [Fc], and hence a CFRP having the high impact resistance can be obtained. The impact resistance herein can be evaluated in terms of the compression strength after impact (hereinafter referred to as CAI). In the present invention, the CAI of the CFRP is the CAI after application of an impact energy of 6.7 J per 1-mm thickness of a test piece according to JIS K 7089 (1996). The higher the CAI, the better. The CAI is preferably not less than 150 MPa, more preferably not less than 180 MPa, still more preferably not less than 210 MPa.

The CFRP of the present invention can have a high 0° compression strength. The 0° compression strength of the CFRP is preferably not less than 250 MPa, more preferably not less than 280 MPa, still more preferably not less than 300 MPa. In the CFRP, the distribution curve obtained from the free volume radius obtained by positron annihilation lifetime measurement and its existence probability preferably shows an average pore radius of not more than 0.270 nm, less than 0.255 nm, or less than 0.248nm. In cases where the average pore radius is not more than 0.270 nm, deformation is less likely to occur upon application of a compression stress, so that the compression strength is improved. Regarding the lower limit, the average pore radius is preferably not less than 0.230 nm, more preferably not less than 0.240 nm, still more preferably not less than 0.245 nm. In cases where the average pore radius is not less than this preferred lower limit, an increase in the sites incapable of initial deformation upon application of a tensile stress can be prevented, and hence the tensile strength can be increased.

The prepreg of the present invention may be in the form of a one-directional prepreg or a woven-fabric prepreg.

The carbon fibers [A] constituting the prepreg of the present invention are usually present as bundles. The carbon fibers [A] are preferably arranged in one direction, and have a mass per unit area of preferably not less than 120 g/m², more preferably not less than 250 g/m², still more preferably not less than 350/m². The CFRP can be obtained by laminating a plurality of prepregs and then curing the resulting laminate. In cases where the amount of carbon fibers per prepreg is large, the number of times of the lamination can be reduced, so that the cost of the molding process can be reduced. The thickness of each interlayer between carbon fiber layers tends to be increased, for example, in cases where 12 prepregs of 380 g/² are laminated, compared to cases where 24 prepregs of 190 g/² are laminated, due to effects of voids and the like. In such cases, the thickness tends to vary due to the particles in the interlayer. Therefore, when such a prepreg containing a large mass of carbon fiber bundles is used, the configuration of the present invention can be said to be more useful. The upper limit of the weight of the carbon fibers [A] per unit area is not limited. However, since the drapability (bendability during the lamination or slit processing) tends to be improved in cases where the amount of the carbon fiber bundles is small, the weight is preferably not more than 1200 g/m², more preferably less than 600 g/m², still more preferably less than 400 g/m².

The prepreg of the present invention may be cut into a predetermined width by a known method, to be used in the form of a tape or a thread. These tape-shaped or thread-shaped prepregs (which may be hereafter referred to as slit tapes) can be suitably used for an automatic lamination apparatus. The cutting of the prepreg (which may be hereinafter referred to as slit processing) can be carried out using a commonly used cutter. Examples the cutter include cemented carbide blade cutters, ultrasonic cutters, and round blade cutters. In recent years, the automated tape layup (ATL) method or the automated fiber placement (AFP) method using an automated lamination apparatus has come to be used for producing large composite materials such as those for aircraft and automobiles. In the AFP method, about ten to several ten narrow slit tapes having a width of 3 to 13 mm are passed between guide rolls, collected on a machine head, and then laminated on a base material in order to achieve a high lamination efficiency. Therefore, for prepregs, recent emphasis has been placed on the quality after the preparation of the slit tapes. Slit processing sometimes causes fuzz generation from carbon fibers, resulting in deterioration of the quality. In order to suppress the fuzz generation, local placement of the conductive particles [Gp] was found to be important.

In the prepreg of the present invention, not less than 80% by area of the conductive particles [Gp] as a component are selectively placed at the depth corresponding to 20% from the surface of the prepreg relative to the average thickness of the prepreg. Not less than 85% by area of the particles are more preferably placed in the interlayer. Not less than 92% by area of the particles are still more preferably placed in the interlayer. In cases where the prepreg is subjected to slit processing, a high-quality narrow prepreg (slit tape) hardly showing fuzz generation can be obtained, and this narrow prepreg hardly showing fuzz generation can be laminated using ATL or AFP. Thus, curing of the resulting laminate enables production of a carbon fiber composite material with excellent design, having high impact resistance, and also having high conductivity in the thickness direction. Here, as illustrated in Fig. 5, in cases where particles such as conductive particles [Gp] having a particle diameter of not less than 1 µm are present in the vicinity of cut carbon fibers, cutting of carbon fibers by slit processing or the like causes interfacial delamination between the conductive particles [Gp] having a particle diameter of not less than 1 µm and the epoxy resin, and the delaminated surfaces are connected to each other. As a result, carbon fibers not fixed by the epoxy resin are pulled to cause fuzz generation. By allowing the conductive particles [Gp] having a particle diameter of not less than 1 µm to be present within the range corresponding to 20% from the prepreg surface relative to the average thickness of the prepreg, the fuzz generation can be suppressed. Here, the thermoplastic resin particles [Ep] are less likely to cause fuzz generation even in cases where they are present in the carbon fiber layers, compared to the cases where the conductive particles [Gp] having a particle diameter of not less than 1 µm are present in these layers. This may be due to the fact that the thermoplastic resin particles [Ep] are adhering to the epoxy resin in their vicinity. Regarding the conductive nanofiller [Fp], fuzz generation is less likely to occur depending on the structure size. This may be due to the fact that the size of the conductive nanofiller [Fp] is smaller than the conductive particles [Gp] having a particle diameter of not less than 1 µm.

In cases where prepregs having on their surfaces conductive particles [Gp] having a particle diameter of not less than 1 µm are laminated and cured, conductive particles [Gc] are placed in the interlayer as a result. Because of the high resin toughness of the interlayer, upon application of a stress such as an impact or a tension, the stress can be absorbed by the tough resin in the vicinity of the [Gc], which is advantageous. Specifically, in an observed image of a cross-section obtained by cutting the CFRP in the thickness direction at an arbitrary position, preferably not less than 80% by area, more preferably not less than 85% by area, still more preferably not less than 92% by area of the conductive particles [Gc] are placed in the interlayer between the carbon fiber layers. Similarly, as described above, not less than 80% by area of the thermoplastic resin particles [Ec] are preferably placed in the interlayer from the viewpoint of increasing the impact resistance and the tensile strength. The thermoplastic resin particles [Ec] are more preferably placed only in the interlayer.

Further, it was found that the fuzz generation can be suppressed on the prepreg surface by providing portions composed of a thermoplastic resin containing a filler and portions composed of a thermoplastic resin containing neither particles nor a filler. Specifically, in cases where a conductive nanofiller [Fp] is used, the fuzz generation can be effectively suppressed by kneading it into the master batch [BCFp] or [BCFGp], and placing a semi-cured product thereof on the surface. When the conductive nanofiller [Fp] present on the surface of the prepreg is ablated by a blade for slit processing, a guide roll, or the like, the nanofiller scatters in a state where the epoxy resin in the vicinity thereof is adhering to the nanofiller. This may cause adhesion of the epoxy resin to the slit blade and the guide roll, and, when a cross-section of the slit tape is brought into contact with the epoxy resin, fuzz may be pulled out of the slit tape. Thus, in cases where the conductive nanofiller [Fp] is kneaded into the master batch [BCFp] or [BCFGp], and then a semi-cured product of the kneaded product is locally placed, the conductive nanofiller [Fp] may be fixed to the epoxy resin [Bp] and the aromatic polyamine compound [Cp] in its vicinity, so that the scattering may be less likely to occur.

The prepreg of the present invention has not only lightning resistance, but also high slit processability. Furthermore, the prepreg can be prepared into a high-quality narrow prepreg hardly showing fuzz generation. Specifically, a prepreg having a width of not more than 5 inches, more preferably 0.1 inches to 3 inches, still more preferably 0.2 inches to 1 inch can be advantageously obtained.

The CFRP of the present invention can be obtained by laminating prepregs of the present invention into a predetermined form, and then heating the resulting laminate to cure the resin. From the viewpoint of suppressing voids and obtaining a uniformly cured product, it is preferred to apply pressure during molding. Examples of the method of application of the heat and the pressure include known methods such as the autoclave molding method, the press forming method, the bag molding method, the wrapping tape method, and the internal pressure molding method. Further, as a prepreg having lightning resistance, high width accuracy can be achieved at the time of slitting, and fuzz generation can be suppressed even in cases where the width is not more than 5 inches, so that the prepreg can be suitable used for obtaining a CFRP by molding utilizing ATL or AFP.

Since the CFRP and the prepreg of the present invention have excellent tensile strength and impact resistance, and can achieve a lightning resistance higher than those of conventional prepregs, the CFRP and the prepreg of the present invention can contribute to sports-good applications and automotive applications, and especially to weight saving of airframes in the aerospace field.

The upper and lower limits of the numerical ranges described above can be combined as desired.

### EXAMPLES

The present invention is described below in more detail by way of Examples. However, the scope of the present invention is not limited to these Examples. The unit of the composition ratio "parts" means parts by mass unless otherwise specified. Unless otherwise specified, the measurement of the properties (physical properties) was carried out in an environment at a temperature of 23°C and a relative humidity of 50%.

### <Materials Used in Examples>

### Carbon fibers [A]

· "TORAYCA" (registered trademark) T800S-24K-10E (number of fibers, 24,000; tensile modulus, 294 GPa; density, 1.8 g/cm³; manufactured by Toray Industries, Inc.)

### Epoxy resin [Bp]

· "Araldite" (registered trademark) GY282 (component: bisphenol F type epoxy resin [BisF]), manufactured by Huntsman Advanced Materials
· "Araldite" (registered trademark) MY721 (tetraglycidyl diaminodiphenylmethane [TGDDM], manufactured by Huntsman Advanced Materials)
· GAN (A-diglycidyl aniline [GAN]) manufactured by Nippon Kayaku Co., Ltd.)

### Aromatic polyamine compound [Cp]

· "SEIKACURE" (registered trademark) S (4,4'-diaminodiphenylmethane [4,4'-DDS]), manufactured by Seika Corporation

### Thermoplastic resin having a polyarylether backbone [Dp]

· "Virantage" (registered trademark) VW-10700RP (polyethersulfone [PES]), manufactured by Solvay Advanced Polymers

### Thermoplastic resin particles [Ep]

· "Orgasol" (registered trademark) 1002D [PA6], manufactured by Atochem
· Nylon Particles SP-10, manufactured by Toray Industries, Inc.
· An epoxy-modified polyamide (which may be hereinafter referred to as EPA) produced by the following method. First, 90 parts by mass of a transparent polyamide ("Grilamid" (registered trademark) TR55, manufactured by EMS-CHEMIE (Japan) Ltd.), 7.5 parts by mass of an epoxy resin ("jER" (registered trademark) 828, manufactured by Mitsubishi Chemical Corporation), and 2.5 parts by mass of a curing agent ("Tohmide" (registered trademark) #296, manufactured by T&K TOKA Corporation) were added to a mixed solvent of 300 parts by mass of chloroform and 100 parts by mass of methanol, to obtain a homogeneous solution. Subsequently, using a spray gun for coating, the homogeneous solution obtained was sprayed in the form of mist onto the liquid surface of 3000 parts by mass of n-hexane while the n-hexane was stirred, to allow precipitation of the solute. The precipitated solid was separated by filtration, washed well with n-hexane, and then subjected to suction drying at a temperature of 100°C for 24 hours, to obtain spherical epoxy-modified polyamide particles having a semi IPN structure.
· "Grilamid" (registered trademark) TR55 particles [GA], manufactured by EMS-CHEMIE (Japan) Ltd.

### Conductive nanofiller [Fp] having an individual particle diameter of less than 1 µm

· Conductive carbon black #3230B [CB] (component: furnace black; average particle diameter of primary particles, 23 nm; aspect ratio, 1; manufactured by Mitsubishi Chemical Corporation)

### Conductive particles [Gp] having an individual particle diameter of not less than 1 µm

· Conductive particles [CP26] obtained by subjecting phenolic resin particles (Marilin HF type, manufactured by by GUN EI Chemical Industry Co., Ltd.) to calcination at 2000°C and then to classification (component: carbon; D50 in the particle diameter distribution, 26 µm)

### Conductive particles [FGp] containing both particles having an individual particle diameter of less than 1 µm and particles having an individual particle diameter of not less than 1 µm

· ICB-0120 (manufactured by Nippon Carbon Co., Ltd.) [CP02] (component: carbon; D50 in the particle diameter distribution, 2 µm; aspect ratio, 1)
· Ag-208 [Ag] (component: silver; D50 in the particle diameter distribution, 1 µm; aspect ratio, 1), manufactured by Shoei Chemical Inc.

### [Preparation Example 1 of Master Batch of Epoxy Resin [Bp] and Conductive Nanofiller [Fp]]

After mixing 70 parts by mass of the epoxy resin [Bp] with 30 parts by mass of the conductive nanofiller [Fp], the resulting mixture was stirred with application of shearing by multi-axis stirring using a planetary mixer manufactured by PRIMIX Corporation, and then coarse foreign matter was removed by a triple roll mil, to obtain a master batch [BFp]. This operation was carried out under an environment at room temperature.

### [Preparation Example 2 of Master Batch of Epoxy Resin [Bp] and Conductive Nanofiller [Fp]]

After mixing 80 parts by mass of the epoxy resin [Bp] with 20 parts by mass of the conductive nanofiller [Fp], the resulting mixture was mildly stirred using a spatula, and then coarse foreign matter was removed by a triple roll mil, to obtain a master batch [BFp]. This operation was carried out under an environment at room temperature.

### [Preparation Example of Master Batch of Epoxy resin [Bp], Aromatic Polyamine Compound [Cp], Conductive Nanofiller [Fp], and Conductive Particles [FGp] Containing Both Particles Having Individual Particle Diameter of Less Than 1 µm and Particles Having Individual Particle Diameter of Not Less Than 1 µm, and Masses of Conductive Paste]

After mixing 100 parts by mass of the epoxy resin [Bp] with 140 parts by mass of the conductive nanofiller [Fp] or the conductive particles [FGp] containing both particles having an individual particle diameter of less than 1 µm and particles having an individual particle diameter of not less than 1 µm, the resulting mixture was stirred with application of shearing by multi-axis stirring using a planetary mixer manufactured by PRIMIX Corporation, and 40 parts by mass of the aromatic polyamine compound [Cp] was added thereto, followed by further stirring the resulting mixture. Subsequently, coarse foreign matter was removed by a triple roll mil, to prepare a master batch [BCFp] or [BCFGp], This operation was carried out under an environment at room temperature.

Black film X30, manufactured by Toray Industries, Inc., was cut into the A4 size, and irradiated with infrared laser at a wavelength of 1069 nm and an output of 2 W at equal intervals. By this, the black film was prepared into a film on which holes were formed at the equal intervals in a circular pattern by the laser. The resulting film was used as a stencil. An FEP film and the stencil were layered on an iron plate, and the edge portions were fixed, followed by extruding a paste through the stencil by a squeegee, to prepare a paste sheet on which masses of the paste were formed at equal intervals. While the sheet was fixed on the iron plate, heat treatment was carried out at 120°C for 30 minutes to obtain an FEP film supporting masses of a cured conductive paste (which may be hereinafter referred to as paste masses). The preparation conditions were set as follows: the height of the obtained paste masses was adjusted based on the thickness of the black film; the particle diameter in the surface direction of the paste was adjusted based on the laser irradiation diameter; and the paste intervals were adjusted based on the intervals between the laser irradiation centers.

### [Preparation of First Resin]

The epoxy resin [Bp] and the thermoplastic resin having a polyarylether backbone [Dp] listed in Table 1 were fed into a kneading machine, and then heated and stirred to perform kneading until the thermoplastic resin having a polyarylether backbone [Dp] was dissolved in the epoxy resin [Bp]. Thereafter, the heating was stopped, and then the master batch [BFp] was added to the kneaded product, followed by stirring the resulting mixture while the temperature was decreased. When the temperature reached about 60°C, the aromatic polyamine compound [Cp] was added, and the resulting mixture was stirred to obtain a first resin. The feeding ratios of the raw materials were as described in the tables.

### [Preparation of Second Resin]

The epoxy resin [Bp] and the thermoplastic resin having a polyarylether backbone [Dp] listed in Table 1 were fed into a kneading machine, and then heated and stirred to perform kneading until the thermoplastic resin having a polyarylether backbone [Dp] was dissolved in the epoxy resin [Bp]. Thereafter, the heating was stopped, and then the thermoplastic resin particles [Ep], the conductive particles having an individual particle diameter of not less than 1 µm [Gp], and the master batch [BFp] were added to the kneaded product, followed by stirring the resulting mixture while the temperature was decreased. When the temperature reached about 60°C, the aromatic polyamine compound [Cp] was added, and the resulting mixture was stirred to obtain a second resin. The feeding ratios of the raw materials were as described in the tables. In each table, 0 part by mass means "no addition" regarding the conductive particles having an individual particle diameter of not less than 1 µm [Gp] and the master batch [BFp]. In cases where the hemispherical paste was used as the master batch [BFp], the hemispherical paste was peeled off from the the FEP film before the feeding. The method of kneading the hemispherical paste into the second resin is referred to as "resin kneading" in the tables.

### [Preparation of Resin Films]

When bundles of carbon fibers [A] of 190 g/m² were used, release paper was coated with the first resin using a knife coater such that the amount of the resin was 30 g/m². By this, two first resin films were prepared for each Example or Comparative Example. In a similar manner, the second resin was used in an amount of 20 g/m² to prepare two second resin films for each case. Similarly, when bundles of carbon fibers [A] of 270 g/m² were used, the films were prepared such that the first resin was in an amount of 42 g/m², and such that the second resin was in an amount of 28 g/m². When bundles of carbon fibers [A] of 380 g/m² were used, the films were prepared such that the first resin was in an amount of 60 g/m², and such that the second resin was in an amount of 40 g/m². Subsequently, when necessary, the FEP film supporting the paste masses was attached to the second resin film such that the paste masses were brought into contact with the resin film, and then the FEP film was peeled off such that the paste masses were transferred onto the resin film. The method of transferring the paste masses to the second resin film is referred to as "transfer" in the tables.

### [Preparation of Two-Step-Impregnated Prepreg]

The first resin films were layered on both sides of carbon fibers that were arranged in one direction to form a sheet-like shape having the areal weight described in Table 1. The first resin was then impregnated into the carbon fibers by heating and pressurization, to prepare a first impregnate prepreg in which the mass fraction of the matrix resin was 24.9%. Subsequently, the second resin films were layered on both sides of the first impregnate prepreg, and heat and pressure were applied thereto to laminate the second resin films on the first impregnate prepreg, to prepare a two-step-impregnated prepreg. The mass fraction of the matrix resin was 35.4%.

### [Preparation of One-Step-Impregnated Prepreg]

The second resin films were layered on both sides of carbon fibers that were arranged in one direction to form a sheet-like shape having the areal weight described in Table 1. The second resin was then impregnated into the carbon fibers by heating and pressurization, to prepare a one-step-impregnated prepreg in which the mass fraction of the matrix resin was 35.4%.

### (1) Measurement of Compression Strength After Impact of CFRP

The prepreg produced in each case was cut into pieces with a predetermined size. The pieces were laminated such that combinations each composed of three repeats of the basic unit [+45°/0°/-45°/90°] (in which the longitudinal direction of the carbon fibers is defined as 0°) were symmetrically laminated to finally form a 24-ply quasi-isotropic preliminary laminate. The resulting laminate was vacuum-bagged, and then cured under the conditions shown in Table 1 using an autoclave, to obtain a CFRP. A rectangular test piece of 150 mm (length) × 100 mm (width) was cut out from the obtained CFRP, and a drop impact of 6.7 J per 1-mm thickness of the test piece was applied to the center of the test piece according to JIS-K7089 (1996), followed by measurement of the residual compression strength according to JIS K 7089 (1996). The measurement was carried out six times, and the average was regarded as the compression strength after impact (CAI) (MPa).

### (2) Measurement of Volume Resistivity of CFRP in Thickness Direction

The prepreg produced in each case was used to prepare two laminates each composed of two repeats of the basic unit [+45°/0°/-45°/90°] (in which the longitudinal direction of the carbon fibers is defined as 0°), and then the two laminates were symmetrically laminated to finally form a 16-ply quasi-isotropic preliminary laminate. The resulting preliminary laminate was placed in an autoclave, and cured under the conditions shown in Table 1, to obtain a CFRP. A sample of 40 mm (length) × 40 mm (width) was cut out from the obtained CFRP. The resin layers on both surfaces were removed by polishing, and then the conductive paste N-2057 (manufactured by Shoei Chemical Inc.) was applied to both sides to a thickness of about 70 µm using a bar coater, followed by curing it for 30 minutes in a hot air oven in which the temperature was adjusted to 180°C, to obtain a sample for evaluation of the conductivity. The resistance of the obtained sample in the thickness direction was measured by the four-terminal method using an R6581 digital multimeter manufactured by Advantest Corporation. The measurement was carried out six times, and the average was regarded as the volume resistivity (Qcm) of the CFRP in the thickness direction.

### (3) Individual Particle Diameters and Average Particle Diameter of Primary Particles, and Structure Size of Conductive Nanofiller [Fc]

The CFRP obtained in (2) above was sectioned with a microtome, and observed under a transmission electron microscope (TEM). For the conductive nanofiller [Fc], the distance in the direction of the longest part of each primary particle was measured as the individual particle diameter, and the average for 100 particles was calculated to obtain the average particle diameter of the primary particles of the conductive nanofiller [Fc]. One hundred structures of the conductive nanofiller [Fc] having the largest sizes were selected, and the distance in the direction of the longest part was measured for each structure. The average was calculated to obtain the structure size of the conductive nanofiller [Fc].

### (4) Aspect Ratio of Thermoplastic Resin Particles [Ec]

For each of five CFRPs obtained in each case, an arbitrary position was selected. At the selected position, a cross-section in the thickness direction was obtained, and observed using a scanning electromicroscope at a magnification of about ×200 to ×1000. In this manner, cross-sectional images were obtained one by one. For each cross-sectional image, a thermoplastic resin particle present in an interlayer and positioned near the center was subjected to measurement using the length measuring tool attached to the microscope, wherein the length of the longest possible straight line among the diagonal lines that pass the center of the particle was regarded as the major axis, and the length of the diagonal line that can be drawn, perpendicularly to the straight line indicating the major axis, through the center of the particle was regarded as the minor axis. Subsequently, measurement was similarly carried out for 19 particles that were present in the same interlayer as, and positioned close to, the measured particle near the center. In addition, the same measurement was carried out for the remaining four cross-sections, to finally obtain the major axis and the minor axis for 100 particles.

Subsequently, the number of particles having a major axis/minor axis ratio of not less than 1.1 was counted among the 100 particles, to calculate the ratio (%) of thermoplastic resin particles [Ec] having an aspect ratio of not less than 1.1.

### (5) D10, D50, and D90 in Particle Diameter Distribution of Thermoplastic Resin Particles [Ep] or Conductive Particles Having Individual Particle Diameter of Not Less Than 1 µm [Gp]

Particles of the thermoplastic resin particles [Ep] or the conductive particles having an individual particle diameter of not less than 1 µm [Gp] were added to distilled water to a particle concentration of about 0.1% by mass, and then dispersed by ultrasonication. The resulting dispersion was subjected to measurement of the particle diameter distribution by volume using a laser diffraction particle diameter distribution analyzer (SALD-2100, manufactured by Shimadzu Corporation). The particle diameter detection range was set to 1 to 100 µm, and this range was divided into 50 intervals. The relative amount of particles by volume was plotted on the ordinate, and the logarithm of the particle diameter was plotted on the abscissa. The plots were connected to each other with straight lines to obtain a particle diameter distribution chart. In the particle diameter distribution chart, the particle diameter at the point where the cumulative frequency of the individual particle diameter reaches 10%, 50%, or 90% was defined as D10, D50, or D90 in the particle diameter distribution of the particles.

### (6) Uniformity of Thickness of Carbon Fiber Layer

For the scanning electromicroscopic images obtained in (4), an image of a carbon fiber layer in the direction at +45° or the direction at -45° was subjected to measurement using the length measuring tool attached to the microscope, wherein 50 lines were drawn from the upper end to the lower end of the image at 20-µm intervals, and the lengths of the lines were measured. In this measurement, units composed of several fibers that have become free from the carbon fiber layer and moved into the interlayer were not included in the carbon fiber layer. Among the five lines positioned in the right end of the obtained image, four lines were selected by excluding the longest line. The lengths of the four lines were summed, and then divided by 4 to calculate the average. The exclusion of the longest line was carried out in order to reduce the risk of including carbon fibers that have become free from the carbon fiber layer in the calculation. Subsequently, the same operation was carried out for combinations of five lines corresponding to, for example, the 6th to 10th lines and the 11th to 15th lines as counted from the rightmost line in the image, and the average was similarly calculated from the lengths of four lines in each combination. Such calculation was carried out for 10 sites per image, to finally obtain averages from a total of 50 sites in the five images. The resulting 50 averages were summed and then divided by 50, to calculate the average thickness of the carbon fiber layer. Subsequently, 50 thickness variations (%) were obtained according to (average at each of 50 sites ÷ average thickness of carbon fiber layer) × 100. The uniformity was rated as excellent when the maximum value among the 50 thickness variations was less than 110%, and at the same time, the minimum thickness variation was not less than 95%. Similarly, the uniformity was rated as good when the maximum thickness variation was less than 130%; the minimum thickness variation was not less than 85%; and at the same time, the conditions for the excellent uniformity were not satisfied. Carbon fiber layers rated as excellent or good were judged as having a uniform thickness.

### (7) Slit Processability

A prepreg was subjected to slit processing at intervals of 5 inches at a rate of 18 m/min for 20 m along the fiber direction using the automatic cutter "GERBERcutter" (registered trademark) DSC, manufactured by Gerber Technology, together with a Circular Blade 28 mm (RB28), manufactured by Olfa Corporation, as a 28-mm circular blade. The resulting cross-sections were visually observed to count the number of fuzzes with a length of not less than 3 cm. The slit processability was rated as excellent when the number of fuzzes generated was not more than 2 at the point of 20 m from the beginning of the slit. The slit processability was rated as good when a third fuzz was generated at a point between 15 m and 20 m from the beginning of the slit. The slit processability was rated as fair when a third fuzz was generated at a point between 10 m and 15 m. The slit processability was rated as poor when the number of fuzzes generated was not less than 3 at the point of 10 m from the beginning.

### (8) Ratio of [Gp] Distributed within Depth Range of 20% from Prepreg Surface

A prepreg was sandwiched between, and brought into close contact with, two polytetrafluoroethylene resin plates having smooth surfaces, and the temperature was slowly increased to 150°C for 7 days to allow gelation and curing, to prepare a plate-like cured resin. Thereafter, the plate-like cured resin was cut in the direction perpendicular to the adhesion surfaces, and the resulting cross-section was polished, followed by taking a photograph using a scanning electromicroscope at a magnification of about ×200 to ×1000 such that the upper and lower sides of the prepreg were included in the field of view. Subsequently, the distance between the polytetrafluoroethylene resin plates was measured at five sites along the transverse direction in the photograph of the cross-section, and the average (n=5) was determined as the thickness of the prepreg. For each side of the prepreg, a line parallel to the surface of the prepreg was drawn at a depth of 20% (relative to the thickness) from the prepreg surface, to draw a total of two lines. Subsequently, the total area of the particles present between the prepreg surface and the line was measured and calculated, and then the total area of the particles present in the entire prepreg subjected to the measurement was measured, followed by dividing the former value by the latter value. By this, the abundance ratio of the particles present within the depth range of 20% from the prepreg surface was calculated, wherein the depth range was determined taking the thickness of the prepreg as 100%.

### (Example 1)

The resin composition described as Example 1 in Table 1-1 was prepared into a master batch by the method of Preparation Example 1. A prepreg was then produced by the two-step impregnation method. The obtained prepreg was cut into pieces with a predetermined size, followed by lamination of the pieces in the number described for each measurement method. The resulting laminate was vacuum-bagged, and then kept at a temperature of 180°C and a pressure of 6 kg/cm² for 2 hours using an autoclave, to obtain a CFRP.

The prepreg had excellent slit processability, and the CFRP obtained by curing had excellent compression strength after impact and excellent conductivity in the thickness direction.

### (Comparative Example 1)

A prepreg and a CFRP were obtained by the same method as in Example 1 except that the resin composition described as Comparative Example 1 in Table 1-1 was prepared into the master batch by the method of Preparation Example 1.

In the CFRP obtained by curing, the value according to Formula (1) was high; the number of particles having the aspect ratio was small since the thermoplastic resin particles [Ec] were tightly packed; the thermoplastic resin particles were forming an insulating layer in the interlayer as illustrated in Fig. 2; so that the CFRP had poor conductivity in the thickness direction. Large thermoplastic resin particles [Ec] increased the interlayer thickness to cause unevenness of the thickness. The average interlayer thickness was 56 µm.

### (Example 2)

A prepreg and a CFRP were obtained by the same method as in Example 1 except that the resin composition described as Example 2 in Table 1-1 was prepared into the master batch by the method of Preparation Example 1.

The prepreg had excellent slit processability, and the CFRP obtained by curing had excellent compression strength after impact and excellent conductivity in the thickness direction.

### (Comparative Example 2)

A prepreg and a CFRP were obtained by the same method as in Example 1 except that the resin composition described as Comparative Example 2 in Table 1-1 was used.

Although the prepreg had excellent slit processability, the CFRP obtained by curing had no thermoplastic resin particles [Ec], and had poor compression strength after impact.

### (Example 3)

A prepreg and a CFRP were obtained by the same method as in Example 1 except that the resin composition described as Example 3 in Table 1-1 was used.

The prepreg had excellent slit processability. The CFRP obtained by curing did not have high compression strength after impact since the amount of the thermoplastic resin particles [Ec] was small. However, the CFRP had excellent conductivity in the thickness direction.

### (Comparative Example 3)

A prepreg and a CFRP were obtained by the same method as in Example 1 except that the resin composition described as Comparative Example 3 in Table 1-1 was used.

The prepreg had excellent slit processability. In the CFRP obtained by curing, the number of particles having the aspect ratio was small since the high melting point of the thermoplastic resin particles prevented the particles from squashing as illustrated in Fig. 1. Large thermoplastic resin particles [Ec] increased the interlayer thickness to cause unevenness of the carbon fiber layer thickness, and the conductivity in the thickness direction was poor.

### (Comparative Example 4)

A prepreg and a CFRP were obtained by the same method as in Example 2 except that the master batch was prepared by the method of Preparation Example 2.

Although the prepreg had excellent slit processability, the CFRP obtained by curing had a small structure size of the conductive nanofiller [Fc], and had poor conductivity in the thickness direction.

### (Example 4)

The resin composition described as Example 4 in Table 1-2 was prepared into a master batch by the method of Preparation Example 1. A prepreg was then produced by the one-step-impregnation method. The obtained prepreg was cured by the method in Example 1, to obtain a CFRP.

Since the thermoplastic resin particles [Ep1] and the conductive nanofiller [Fp1] were contained in the carbon fiber layer, slight fuzz generation occurred during the slit processing of the prepreg. The CFRP obtained by curing had excellent conductivity in the thickness direction although the level of the compression strength after impact was not higher than those in other cases. The excellent conductivity in the thickness direction is thought to be due to the fact that entrance of the thermoplastic resin particles [Ec] into the carbon fiber layer reduced the interlayer thickness to 36 µm to achieve a smaller interlayer thickness compared to other cases, thereby promoting formation of conductive paths between the carbon fiber layers on the upper and lower sides of each interlayer.

### (Example 5)

A prepreg and a CFRP were obtained by the same method as in Example 1 except that the first resin composition described as Example 5 in Table 1-2 was prepared into a master batch by the method of Preparation Example 2, and that the second resin composition was prepared into a master batch by the method of Preparation Example 1. The prepreg had excellent slit processability, and the CFRP obtained by curing had excellent compression strength after impact and excellent conductivity in the thickness direction.

### (Example 6)

A prepreg and a CFRP were obtained by the same method as in Example 1 except that the resin composition described as Example 6 in Table 1-2 was used. The prepreg had excellent slit processability. The CFRP obtained by curing did not have high compression strength after impact since it contained the conductive particles [Gc]. However, excellent conductivity in the thickness direction was achieved by addition of only a small amount of conductive particles [Gc].

### (Example 7)

A prepreg and a CFRP were obtained by the same method as in Example 1 except that the epoxy-modified polyamide particles as the thermoplastic resin particles [Ep] to be included in the second resin were subjected to classification to remove particles having a small particle diameter. The prepreg had excellent slit processability. The CFRP obtained by curing had conductivity in the thickness direction equivalent to that of Example 1 while having a higher compression strength after impact.

### (Comparative Example 5)

A prepreg and a CFRP were obtained by the same method as in Example 1 except that the resin composition described as Comparative Example 5 in Table 1-2 was used.

Since the thermoplastic resin particles [Ep] included in the second resin had small D10 in the particle diameter distribution, a large number of the thermoplastic resin particles [Ep] entered the carbon fiber layer. As a result, slight fuzz generation occurred during the slit processing of the prepreg, and the CFRP obtained by curing had poor compression strength after impact. Further, the carbon fiber layer thickness was uneven, and the conductivity in the thickness direction was poor.

### (Example 8)

A prepreg and a CFRP were obtained by the same method as in Example 1 except that the resin composition described as Example 8 in Table 2-1 was used.

Since the thermoplastic resin particles [Ep] and the conductive nanofiller [Fp] included in the first resin were contained in the carbon fiber layer, slight fuzz generation occurred at an acceptable level during the slit processing of the prepreg. The CFRP obtained by curing had excellent conductivity in the thickness direction although the level of the compression strength after impact was not higher than those in other cases.

### (Example 9)

For the second resin, particles [CP02] containing both a conductive nanofiller [Fp] having an individual particle diameter of less than 1 µm and conductive particles [Gp] having a particle diameter of not less than 1 µm were used. Dot-like masses of a conductive paste were prepared by stencil printing on an FEP film according to the Preparation Example. The masses were semi-cured, peeled off from the FEP film, and then subjected to resin kneading such that the resin composition described as Example 8 in Table 2-1 was achieved, to prepare a second resin. The resin was then placed on release paper to prepare a second resin film. A prepreg and a CFRP were obtained by the same method as in Example 1 except for the above process. The prepreg had excellent slit processability, and the CFRP obtained by curing had excellent compression strength after impact and excellent conductivity in the thickness direction.

### (Example 10)

A prepreg and a CFRP were obtained by the same method as in Example 9 except that the conductive nanofiller [Fp] was not added to the first resin.

The prepreg had even better slit processability than that of Example 9. Further, the CFRP obtained by curing was excellent although it had rather higher structure resistivity in the thickness direction compared to Example 9 due to the absence of the conductive nanofiller [Fp],

### (Example 11)

A prepreg and a CFRP were obtained by the same method as in Example 1 according to Example 9 except that [CP02] as particles [FGp] containing both particles having an individual particle diameter of less than 1 µm and particles having an individual particle diameter of not less than 1 µm was added instead of the conductive nanofiller [Fp] to the first resin. Fuzz generation extensively occurred during the slit processing of the prepreg. The CFRP obtained by curing had excellent compression ratio after impact and excellent conductivity in the thickness direction. The fuzz generation during the slit processing is thought to be due to the fact that the [CP02] in the carbon fiber layer decreased the adhesive strength between carbon fibers.

### (Example 12)

Dot-like masses of the conductive paste were prepared on the FEP film by the same method as described in Example 9. Subsequently, a resin film for the second resin was prepared such that the resin composition described as Example 11 in Table 2-1 was finally achieved. The FEP film was attached to the resin film such that the dot-like masses of the conductive paste were placed on the resin film. Thereafter, the FEP film was peeled off such that the masses of the conductive paste were transferred to the resin-film side, to prepare the second resin film. A prepreg and a CFRP were obtained by the same method as in Example 1 except for the second film. The prepreg had even better slit processability than that of Example 9, and the CFRP obtained by curing had excellent compression strength after impact and excellent conductivity in the thickness direction.

### (Comparative Example 6)

A prepreg and a CFRP were obtained by the same method as in Example 12 except that the areal weight of the carbon fibers [A] was 380 g/m². The prepreg had excellent slit processability. However, in the CFRP obtained by curing, the value according to (Formula 1) was high; the number of particles having the aspect ratio was small since the thermoplastic resin particles [Ec] were tightly packed; the uniformity of the carbon fiber layer thickness was poor as illustrated in Fig. 12; and the thermoplastic resin particles were forming an insulating layer in the interlayer; so that the CFRP had poor conductivity in the thickness direction.

### (Example 13)

A prepreg and a CFRP were obtained in the same manner as in Comparative Example 6 except that the content of the thermoplastic resin particles [Ep] included in the second resin was reduced such that the value according to (Formula 1) was 50.7. The prepreg had excellent slit processability. The CFRP obtained by curing contained a large number of thermoplastic resin particles [Ec] having the aspect ratio, and had excellent compression strength after impact and excellent conductivity in the thickness direction.

### (Example 14)

A prepreg and a CFRP were prepared in the same manner as in Example 13 except that particles [FGp] containing both particles having an individual particle diameter of less than 1 µm and particles having an individual particle diameter of not less than 1 µm were added to the first resin. Fuzz generation extensively occurred during the slit processing of the prepreg. The CFRP obtained by curing had excellent conductivity in the thickness direction although the compression ratio after impact was slightly lower than those in other Examples.

### (Example 15)

A prepreg and a CFRP were obtained by the same method as in Example 13 except that the thermoplastic resin particles [Ep] were added to the first resin instead of the second resin. Since the thermoplastic resin particles [Ep] and the conductive nanofiller [Fp] included in the first resin were contained in the carbon fiber layer, slight fuzz generation occurred at an acceptable level during the slit processing of the prepreg. The CFRP obtained by curing was excellent although the compression strength after impact and the conductivity in the thickness direction were rather lower than those in other Examples.

### (Example 16)

A prepreg and a CFRP were obtained by the same method as in Example 2 except that the areal weight of the carbon fibers [A] was 380 g/m², and that the resin composition described as Example 16 in Table 2-2 was used. The prepreg had excellent slit processability, and the CFRP obtained by curing was excellent although the conductivity in the thickness direction was rather lower than those in the cases with an areal weight of 270 g/m².

### (Example 17)

A prepreg and a CFRP were obtained by the same method as in Example 6 except that the areal weight of the carbon fibers [A] was 380 g/m². The prepreg had excellent slit processability, and the CFRP obtained by curing was excellent although the conductivity in the thickness direction was rather lower than those in the cases with an areal weight of 270 gsm.

### (Example 18)

A prepreg and a CFRP were obtained by the same method as in Example 1 except that the areal weight of the carbon fibers [A] was 190 g/m², and that the resin composition described as Example 18 in Table 2-2 was used. The prepreg had excellent slit processability. Although the compression strength after impact of the CFRP obtained by curing was rather low, the CFRP had excellent conductivity in the thickness direction since the interlayer thickness was as small as 23 µm.

### (Comparative Example 7)

A prepreg and a CFRP were obtained by the same method as in Example 18 except that the resin composition described as Comparative Example 7 in Table 3 was used. In the CFRP obtained by curing, thermoplastic resin particles having a high melting point expanded the interlayer to 32 µm as illustrated in Fig. 3, so that the conductivity in the thickness direction was lower than those in the other cases with an areal weight of 190 g/m².

### (Example 19)

A prepreg and a CFRP were obtained by the same method as in Example 12 except that the areal weight of the carbon fibers [A] was 190 g/m², and that the type and the content of the thermoplastic resin particles [Ep] included in the second resin were set in accordance with the composition described in Table 3. The prepreg had excellent slit processability. The CFRP obtained by curing contained a large number of thermoplastic resin particles [Ec] having the aspect ratio, and had excellent compression strength after impact and excellent conductivity in the thickness direction.

### (Example 20)

A prepreg and a CFRP were obtained in the same manner as in Example 13 except that the resin composition described as Example 20 in Table 3 was used. Fuzz generation extensively occurred during the slit processing of the prepreg. The CFRP obtained by curing had a lower compression ratio after impact compared to those in other Examples since entrance of the thermoplastic resin particles [Ec] into the carbon fiber layer caused disturbance of carbon fiber bundles. However, this compression ratio after impact was still acceptable, and the CFRP had excellent conductivity in the thickness direction.

### (Example 21)

A prepreg and a CFRP were obtained by the same method as in Example 20 except that the resin composition described as Example 21 in Table 3 was used. The prepreg had excellent slit processability. The CFRP obtained by curing had a lower compression ratio after impact compared to those in other Examples since entrance of the thermoplastic resin particles [Ec] into the carbon fiber layer caused disturbance of carbon fiber bundles. However, this compression ratio after impact was still acceptable, and the CFRP had excellent conductivity in the thickness direction.

### (Comparative Example 8)

A CFRP was obtained by the same method as in Example 20 except that the resin composition described as Comparative Example 8 in Table 3 was used. Regarding the slit processability of the prepreg, fuzz generation extensively occurred. Further, the CFRP obtained by curing had poor conductivity in the thickness direction since the thermoplastic resin particles were forming an insulating layer in the interlayer.

### (Example 22)

A prepreg and a CFRP were obtained by the same method as in Example 17 except that the resin composition described as Example 22 in Table 3 was used. The CFRP obtained by curing had excellent compression strength after impact and excellent conductivity in the thickness direction.

**[Table 1- 1]**

| | | | | | Example 1 | Comparative Example 1 | Example 2 | Comparative Example 2 | Example 3 | Comparative Example 3 |
|---|---|---|---|---|---|---|---|---|---|---|
| Bundle of Carbon Fiber [A] | | | Weight | g/m² | 270 | 270 | 270 | 270 | 270 | 270 |
| | Epoxy Resin [Bp] | Asymmetric Epoxy | | Type | GAN | GAN | GAN | GAN | GAN | GAN |
| | | | | Parts by mass | 25 | 25 | 25 | 25 | 25 | 25 |
| | | Tetrafunctional Epoxy | | Type | TGDDM | TGDDM | TGDDM | TGDDM | TGDDM | TGDDM |
| | | | | Parts by mass | 30 | 30 | 30 | 30 | 30 | 30 |
| | | Bifunctional Epoxy | | Type | BisF | BisF | BisF | BisF | BisF | BisF |
| | | | | Parts by mass | 45 | 45 | 45 | 45 | 45 | 45 |
| | Aromatic Polyamine Compound [Cp] | | | Type | 4,4'-DDS | 4, 4'-DDS | 4, 4'-DDS | 4, 4'-DDS | 4, 4'-DDS | 4, 4'-DDS |
| | | | | Parts by mass | 35 | 35 | 35 | 35 | 35 | 35 |
| | Thermoplastic Resin consisting ot Polyarylether Skeleton [Dp] | | | Type | PES | PES | PES | PES | PES | PES |
| | | | | Parts by mass | 15 | 15 | 15 | 15 | 15 | 15 |
| | Thermoplastic Resin Particles [Ep] | | | Type | - | - | - | - | - | - |
| Feedstock Composition of Primary Resin | | | | Parts by mass | 0 | 0 | 0 | 0 | 0 | 0 |
| | | | | Tg (°C) | - | - | - | - | - | - |
| | | | | Tm (°C) | - | - | - | - | - | - |
| | | | | D10 (µm) | - | - | - | - | - | - |
| | | | | D50 (µm) | - | - | - | - | - | - |
| | | | | D90 (µm) | - | - | - | - | - | - |
| | Conductive Nanofiller [Fp] | | | Type | CB | CB | CB | CB | CB | CB |
| | | | | Parts by mass | 5 | 5 | 5 | 5 | 5 | 5 |
| | Conductive particles of Size 1µm or more [Gp] | | | Type | - | - | - | - | - | - |
| | | | | Parts by mass | 0 | 0 | 0 | 0 | 0 | 0 |
| | Mixed Conductive Particles of Size less than 1µm and Size 1µm or more [FGp] | | | Type | - | - | - | - | - | - |
| | | | | Parts by mass | 0 | 0 | 0 | 0 | 0 | 0 |
| | Epoxy Resin [Bp] | Asymmetric Epoxy | | Type | GAN | GAN | GAN | GAN | GAN | GAN |
| | | | | Parts by mass | 25 | 25 | 25 | 25 | 25 | 25 |
| | | Tetrafunctional Epoxy | | Type | TGDDM | TGDDM | TGDDM | TGDDM | TGDDM | TGDDM |
| | | | | Parts by mass | 30 | 30 | 30 | 30 | 30 | 30 |
| | | Bifunctional Epoxy | | Type | BisF | BisF | BisF | BisF | BisF | BisF |
| | | | | Parts by mass | 45 | 45 | 45 | 45 | 45 | 45 |
| | Aromatic Amine Compound [Cp] | | | Type | 4,4'-DDS | 4, 4'-DDS | 4, 4'-DDS | 4, 4'-DDS | 4, 4'-DDS | 4, 4'-DDS |
| | | | | Parts by mass | 35 | 35 | 35 | 35 | 35 | 35 |
| | Thermoplastic Resin consisting of Polyarylether Skeleton [Dp] | | | Type | PES | PES | PES | PES | PES | PES |
| | | | | Parts by mass | 15 | 15 | 15 | 15 | 15 | 15 |
| | Thermoplastic Resin Particles [Ep] | | | Type | EPA | EPA | EPA | - | EPA | PA6 |
| Feedstock Composition of Secondary Resin | | | | Parts by mass | 80 | 100 | 40 | 0 | 10 | 80 |
| | | | | Tg (°C) | 157 | 157 | 157 | - | 157 | 46 |
| | | | | Tm (°C) | Not Observed | Not Observed | Not Observed | - | Not Observed | 226 |
| | | | | D10 (µm) | 4 | 4 | 4 | - | 4 | 10 |
| | | | | D50 (µm) | 12 | 12 | 12 | - | 12 | 20 |
| | | | | D90 (µm) | 22 | 22 | 22 | - | 22 | 34 |
| | Conductive Nanofiller [Fp] | | | Type | CB | CB | CB | CB | CB | CB |
| | | | | Parts by mass | 5 | 5 | 5 | 5 | 5 | 5 |
| | Conductive particles of Size 1µm or more [Gp] | | | Type | | | | | | |
| | | | | Parts by mass | 0 | 0 | 0 | 0 | 0 | 0 |
| | Mixed Conductive Particles of Size less than 1um and Size 1um or more [FGp] | | | Type | - | - | - | - | - | - |
| | | | | Parts by mass | 0 | 0 | 0 | 0 | 0 | 0 |
| [BFp] Preparation Means of Primary Resin | | | | | Preparation Example 1 | Preparation Example 1 | Preparation Example 1 | Preparation Example 1 | Preparation Example 1 | Preparation Example 1 |
| [BFp] Preparation Means of Secondary Resin | | | | | Preparation Example 1 | Preparation Example 1 | Preparation Example 1 | Preparation Example 1 | Preparation Example 1 | Preparation Example 1 |
| Film Forming Method of Secondary Resin having [FGp] | | | | | - | - | | - | - | - |
| Value of Equation (Amount of Thermoplastic Resin Particles [Ep] in an Interlayer) | | | | | 57.6 | 72.0 | 28.8 | 00 | 7.2 | 57.6 |
| ratio of [Gp] Located at From Prepreg Surface to Equal to 20% Depth | | | | (Areal %) | - | - | - | - | - | - |
| Ratio of Particle having Aspect Rate 1.1 or more | | | | (%) | 44 | 22 | 47 | 0 | 47 | 0 |
| Structure Size [Fc] in Carbon Fiber Layer | | | | (µm) | 0.70 | 0.70 | 0.70 | 0.70 | 0.70 | 0.70 |
| Structure Size [Fc] in Interlayer | | | | (µm) | 0.70 | 0.70 | 0.70 | 0.70 | 0.70 | 0.70 |
| Average Thickness of CFRP Interlayer | | | | (µm) | 43 | 56 | 38 | 13 | 29 | 56 |
| Thickness Uniformity of Carbon Fiber Layer | | | | - | Fair | Faillure | Good | Execllent | Execllent | Faillure |
| Slit Processability | | | | - | Good | Good | Good | Good | Good | Good |
| CFRP Properties | volume resistance in Thickness Direction | | | (Ωcm) | 19 | 280 | 12 | 9 | 12 | 148 |
| | Compressive Strength after Impact | | | (Mpa) | 240 | 270 | 220 | 100 | 190 | 230 |

**[Table 1-2]**

| | | | | | Comparative Example 4 | Example 4 | Example 5 | Example 6 | Example 7 | Comparative Example 5 |
|---|---|---|---|---|---|---|---|---|---|---|
| Bundle of Carbon Fiber [A] | | | Weight | g/m² | 270 | 270 | 270 | 270 | 270 | 270 |
| | Epoxy Resin [Bp] | Asymmetric Epoxy | | Type | GAN | - | GAN | GAN | GAN | GAN |
| | | | | Parts by mass | 25 | 0 | 25 | 25 | 25 | 25 |
| | | Tetrafunctional Epoxy | | Type | TGDDM | - | TGDDM | TGDDM | TGDDM | TGDDM |
| | | | | Parts by mass | 30 | 0 | 30 | 30 | 30 | 30 |
| | | Bifunctional Epoxy | | Type | BisF | - | BisF | BisF | BisF | BisF |
| | | | | Parts by mass | 45 | 0 | 45 | 45 | 45 | 45 |
| | Aromatic Polyamine Compound [Cp] | | | Type | 4,4'-DDS | - | 4,4'-DDS | 4, 4'-DDS | 4, 4'-DDS | 4, 4'-DDS |
| | | | | Parts by mass | 35 | 0 | 35 | 35 | 35 | 35 |
| | Thermoplastic Resin consisting of Polyarylether Skeleton [Dp] | | | Type | PES | - | PES | PES | PES | PES |
| | | | | Parts by mass | 15 | 0 | 15 | 15 | 15 | 15 |
| | Thermoplastic Resin Particles [Ep] | | | Type | - | - | - | - | - | - |
| Feedstock Composition of Primary Resin | | | | Parts by mass | 0 | 0 | 0 | 0 | 0 | 0 |
| | | | | Tg(°C) | - | - | - | - | - | - |
| | | | | Tm(°C) | - | - | - | - | - | - |
| | | | | D10 (µm) | - | - | - | - | - | - |
| | | | | D50 (µm) | - | - | | - | - | - |
| | | | | D90 (µm) | - | - | - | - | - | - |
| | Conductive Nanofiller [Fp] | | | Type | CB | - | CB | CB | CB | CB |
| | | | | Parts by mass | 5 | 0 | 5 | 5 | 5 | 5 |
| | Conductive Particles of Size 1µm or more [Gp] | | | Type | - | - | - | - | - | |
| | | | | Parts by mass | 0 | 0 | 0 | 0 | 0 | 0 |
| | Mixed Conductive Particles of Size less than 1µm and Size 1µm or more [FGp] | | | Type | - | - | - | - | - | - |
| | | | | Parts by mass | 0 | 0 | 0 | 0 | 0 | 0 |
| | Epoxy Resin [Bp] | Asymmetric Epoxy | | Type | GAN | GAN | GAN | GAN | GAN | GAN |
| | | | | Parts by mass | 25 | 25 | 25 | 25 | 25 | 25 |
| | | Tetrafunctional Epoxy | | Type | TGDDM | TGDDM | TGDDM | TGDDM | TGDDM | TGDDM |
| | | | | Parts by mass | 30 | 30 | 30 | 30 | 30 | 30 |
| | | Bifunctional Epoxy | | Type | BisF | BisF | BisF | BisF | BisF | BisF |
| | | | | Parts by mass | 45 | 45 | 45 | 45 | 45 | 45 |
| | Aromatic Amine Compound [Cp] | | | Type | 4,4'-DDS | 4, 4'-DDS | 4, 4'-DDS | 4, 4'-DDS | 4, 4'-DDS | 4, 4'-DDS |
| | | | | Parts by mass | 35 | 35 | 35 | 35 | 35 | 35 |
| | i nermoplastic Resin consisting of Polyarylether Skeleton [Dp] | | | Type | PES | PES | PES | PES | PES | PES |
| | | | | Parts by mass | 15 | 15 | 15 | 15 | 15 | 15 |
| | Thermoplastic Resin Particles [Ep] | | | Type | EPA | EPA | EPA | EPA | EPA | SP-10 |
| | | | | Parts by mass | 40 | 20 | 80 | 40 | 80 | 80 |
| | | | | Tg(°C) | 157 | 157 | 157 | 157 | 157 | 55 |
| Feedstock Composition of Secondary Resin | | | | Tm(°C) | Not Observed | Not Observed | Not Observed | Not Observed | Not Observed | 168 |
| | | | | D10 (µm) | 4 | 4 | 4 | 4 | 8 | 2 |
| | | | | D50 (µm) | 12 | 12 | 12 | 12 | 12 | 10 |
| | | | | D90 (µm) | 22 | 22 | 22 | 22 | 22 | 17 |
| | Conductive Nanofiller [Fp] | | | Type | CB | CB | CB | CB | CB | CB |
| | | | | Parts by mass | 5 | 5 | 5 | 5 | 5 | 5 |
| | Conductive Particles of Size 1µm or more [Gp] | | | Type | - | - | - | CP26 | - | - |
| | | | | Parts by mass | 0 | 0 | 0 | 2 | 0 | 0 |
| | Mixed Conductive Particles of Size less than 1µm and Size 1µm or more [FGp] | | | Type | - | - | - | - | - | - |
| | | | | Parts by mass | 0 | 0 | 0 | 0 | 0 | 0 |
| [BFp] Preparation Means of Primary Resin | | | | | Preparation Example 2 | Preparation Example 1 | Preparation Example 2 | Preparation Example 1 | Preparation Example 1 | Preparation Example 1 |
| [BFp] Preparation Means of Secondary Resin | | | | | Preparation Example 2 | Preparation Example 1 | Preparation Example 1 | Preparation Example 1 | Preparation Example 1 | Preparation Example 1 |
| Film Forming Method of Secondary Resin having [FGp] | | | | | - | - | - | - | - | - |
| Value of Equation (Amount of Thermoplastic Resin Particles [Ep] in an Interlayer) | | | | | 28.8 | 36.0 | 57.6 | 28.8 | 57.6 | 57.6 |
| Ratio of [Gp] Located at From Prepreg Surface to Equal to 20% Depth | | | | (Areal %) | - | - | - | 99 | - | - |
| Ratio of Particle having Aspect Rate 1.1 or more | | | | (%) | 47 | 47 | 44 | 32 | 44 | 27 |
| Structure Size [Fc] in Carbon Fiber Layer | | | | (µm) | 0.17 | 0.70 | 0.17 | 0.70 | 0.70 | 0.70 |
| Structure Size [Fc] in Interlayer | | | | (µm) | 0.17 | 0.70 | 0.70 | 0.70 | 0.70 | 0.70 |
| Average Thickness of CFRP Interlayer | | | | (µm) | 39 | 36 | 42 | 37 | 43 | 37 |
| Thickness Uniformity of Carbon Fiber Layer | | | | - | Good | Good | Fair | Good | Fair | Fair |
| Slit Processability | | | | - | Good | Fair | Good | Good | Good | Fair |
| CFRP Properties | Volume Resistance in Thickness Direction | | | (Ωcm) | 86 | 12 | 17 | 8 | 19 | 27 |
| | Compressive Strength after Impact | | | (Mpa) | 220 | 160 | 240 | 190 | 270 | 120 |

**[Table 2- 1]**

| | | | | | Example 8 | Example 9 | Example 10 | Example 11 | Example 12 | Comparative Example 6 |
|---|---|---|---|---|---|---|---|---|---|---|
| Bundle of Carbon Fiber [A] | | | Weight | g/m² | 270 | 270 | 270 | 270 | 270 | 380 |
| | Epoxy Resin [Bp] | Asymmetric Epoxy | | Type | GAN | GAN | GAN | GAN | GAN | GAN |
| | | | | Parts by mass | 25 | 25 | 25 | 25 | 25 | 25 |
| | | Tetrafunctional Epoxy | | Type | TGDDM | TGDDM | TGDDM | TGDDM | TGDDM | TGDDM |
| | | | | Parts by mass | 30 | 30 | 30 | 30 | 30 | 30 |
| | | Bifunctional Epoxy | | Type | BisF | BisF | BisF | BisF | BisF | BisF |
| | | | | Parts by mass | 45 | 45 | 45 | 45 | 45 | 45 |
| | Aromatic Polyamine Compound [Cp] | | | Type | 4, 4'-DDS | 4, 4'-DDS | 4, 4'-DDS | 4, 4'-DDS | 4, 4'-DDS | 4, 4'-DDS |
| | | | | Parts by mass | 35 | 35 | 35 | 35 | 35 | 35 |
| | Thermoplastic Resin consisting of Polyarylether Skeleton [Dp] | | | Type | PES | PES | PES | PES | PES | PES |
| | | | | Parts by mass | 15 | 15 | 15 | 15 | 15 | 15 |
| Feedstock Composition of Primary Resin | Thermoplastic Resin Particles [Ep] | | | Type | EPA | - | - | - | - | - |
| | | | | Parts by mass | 50 | 0 | 0 | 0 | 0 | 0 |
| | | | | Tg (°C) | 157 | - | - | - | - | - |
| | | | | Tm (°C) | Not Observed | - | - | - | - | - |
| | | | | D10 (µm) | 4 | - | - | - | - | - |
| | | | | D50 (µm) | 12 | - | - | - | - | - |
| | | | | D90 (µm) | 22 | - | - | - | - | - |
| | Conductive Nanofiller [Fp] | | | Type | CB | CB | - | - | - | - |
| | | | | Parts by mass | 5 | 5 | 0 | 0 | 0 | 0 |
| | Conductive Particles of Size 1µm or more [Gp] | | | Type | - | - | - | - | - | - |
| | | | | Parts by mass | 0 | 0 | 0 | 0 | 0 | 0 |
| | Mixed Conductive Particles of Size less than 1 µm and Size 1 µm or more [FGp] | | | Type | - | - | - | CP02 | - | - |
| | | | | Parts by mass | 0 | 0 | 0 | 5 | 0 | 0 |
| | Epoxy Resin [Bp] | Asymmetric Epoxy | | Type | GAN | GAN | GAN | GAN | GAN | GAN |
| | | | | Parts by mass | 25 | 25 | 25 | 25 | 25 | 25 |
| | | Tetrafunctional Epoxy | | Type | TGDDM | TGDDM | TGDDM | TGDDM | TGDDM | TGDDM |
| | | | | Parts by mass | 30 | 30 | 30 | 30 | 30 | 30 |
| | | Bifunctional Epoxy | | Type | BisF | BisF | BisF | BisF | BisF | BisF |
| | | | | Parts by mass | 45 | 45 | 45 | 45 | 45 | 45 |
| | Aromatic Amine Compound [Cp] | | | Type | 4,4'-DDS | 4, 4'-DDS | 4, 4'-DDS | 4, 4'-DDS | 4, 4'-DDS | 4, 4'-DDS |
| | | | | Parts by mass | 35 | 35 | 35 | 35 | 35 | 35 |
| | i nermoplastic Resin consisting of Polyarylether Skeleton [Dp] | | | Type | PES | PES | PES | PES | PES | PES |
| | | | | Parts by mass | 15 | 15 | 15 | 15 | 15 | 15 |
| | Thermoplastic Resin Particles [Ep] | | | Type | - | EPA | EPA | EPA | EPA | EPA |
| Feedstock Composition of Secondary Resin | | | | Parts by mass | 0 | 80 | 80 | 80 | 80 | 80 |
| | | | | Tg (°C) | - | 157 | 157 | 157 | 157 | 157 |
| | | | | Tm(°C) | - | Not Observed | Not Observed | Not Observed | Not Observed | Not Observed |
| | | | | D10 (µm) | - | 4 | 4 | 4 | 4 | 4 |
| | | | | D50 (µm) | - | 12 | 12 | 12 | 12 | 12 |
| | | | | D90 (µm) | - | 22 | 22 | 22 | 22 | 22 |
| | Conductive Nanofiller [Fp] | | | Type | CB | - | - | - | - | - |
| | | | | Parts by mass | 5 | 0 | 0 | 0 | 0 | 0 |
| | Conductive Particles of Size 1µm or more [Gp] | | | Type | - | - | - | - | - | - |
| | | | | Parts by mass | 0 | 0 | 0 | 0 | 0 | 0 |
| | Mixed Conductive Particles of Size less than 1µm and Size 1µm or more [FGp] | | | Type | - | CP02 | CP02 | CP02 | CP02 | CP02 |
| | | | | Parts by mass | 0 | 5 | 5 | 5 | 5 | 5 |
| [BFp] Preparation Means of Primary Resin | | | | | Preparation Example 1 | Preparation Example 1 | Preparation Example 1 | Preparation Example 1 | Preparation Example 1 | Preparation Example 1 |
| [BFp] Preparation Means of Secondary Resin | | | | | Preparation Example 1 | Preparation Example 3 | Preparation Example 3 | Preparation Example 1 | Preparation Example 1 | Preparation Example 1 |
| Film Forming Method of Secondary Resin having [FGp] | | | | | - | Resin Kneading | Resin Kneading | Resin Kneadi ng | Transfer | Transfer |
| Value of Equation (Amount of Thermoplastic Resin Particles [Ep] in an Interlayer) | | | | | 540 | 57.6 | 57.6 | 57.6 | 57.6 | 81.1 |
| Ratio of [Gp] Located at From Prepreg Surface to Equal to 20% Depth | | | | (Areal %) | - | 93 | 93 | 82 | 98 | 98 |
| Ratio of Particle having Aspect Rate 1.1 or more | | | | (%) | 31 | 38 | 44 | 38 | 38 | 25 |
| Structure Size [Fc] in Carbon Fiber Layer | | | | (µm) | 0.70 | 0.70 | - | 1.30 | - | - |
| Structure Size [Fc] in Interlayer | | | | (µm) | 0.70 | 1.30 | 1.30 | 1.30 | 1.30 | 1.30 |
| Average Thickness of CFRP Interlayer | | | | (µm) | 37 | 43 | 44 | 44 | 45 | 57 |
| Thickness Uniformity of Carbon Fiber Layer | | | | - | Good | Good | Good | Good | Good | Faillure |
| Slit Processability | | | | - | Fair | Good | Excellent | Faillure | Excellent | Excellent |
| CFRP Properties | Volume Resistance in Thickness Direction | | | (Ωcm) | 26 | 31 | 21 | 36 | 34 | 660 |
| | Compressive Strength after Impact | | | (Mpa) | 180 | 250 | 240 | 250 | 250 | 220 |

**[Table 2- 2]**

| | | | | | Example 13 | Example 14 | Example 15 | Example 16 | Example 17 | Example 18 |
|---|---|---|---|---|---|---|---|---|---|---|
| Bundle of Carbon Fiber [A] | | | Weight | g/m² | 380 | 380 | 380 | 380 | 380 | 190 |
| | Epoxy Resin [Bp] | Asymmetric Epoxy | | Type | GAN | GAN | GAN | GAN | GAN | GAN |
| | | | | Parts by mass | 25 | 25 | 25 | 25 | 25 | 25 |
| | | Tetrafunctional Epoxy | | Type | TGDDM | TGDDM | TGDDM | TGDDM | TGDDM | TGDDM |
| | | | | Parts by mass | 30 | 30 | 30 | 30 | 30 | 30 |
| | | Bifunctional Epoxy | | Type | BisF | BisF | BisF | BisF | BisF | BisF |
| | | | | Parts by mass | 45 | 45 | 45 | 45 | 45 | 45 |
| | Aromatic Polyamine Compound [Cp] | | | Type | 4,4'-DDS | 4, 4'-DDS | 4, 4'-DDS | 4, 4'-DDS | 4, 4'-DDS | 4, 4'-DDS |
| | | | | Parts by mass | 35 | 35 | 35 | 35 | 35 | 35 |
| | Thermoplastic Resin consisting of Polyarylether Skeleton [Dp] | | | Type | PES | PES | PES | PES | PES | PES |
| | | | | Parts by mass | 15 | 15 | 15 | 15 | 15 | 15 |
| Feedstock Composition of Primary Resin | Thermoplastic Resin Particles [Ep] | | | Type | - | - | EPA | - | - | - |
| | | | | Parts by mass | 0 | 0 | 30 | 0 | 0 | 0 |
| | | | | Tg (°C) | - | - | 157 | - | - | - |
| | | | | Tm (°C) | - | - | Not Observed | - | - | - |
| | | | | D10 (µm) | - | - | 4 | - | - | - |
| | | | | D50 (µm) | - | - | 12 | - | - | - |
| | | | | D90 (µm) | - | - | 22 | - | - | - |
| | Conductive Nanofiller [Fp] | | | Type | - | - | - | CB | CB | CB |
| | | | | Parts by mass | 0 | 0 | 0 | 5 | 5 | 5 |
| | Conductive Particles of Size 1µm or more [Gp] | | | Type | - | - | - | - | - | - |
| | | | | Parts by mass | 0 | 0 | 0 | 0 | 0 | 0 |
| | Mixed Conductive Particles of Size less than 1µm and Size 1µm or more [FGp] | | | Type | - | CP02 | - | - | - | - |
| | | | | Parts by mass | 0 | 5 | 0 | 0 | 0 | 0 |
| | Epoxy Resin [Bp] | Asymmetric Epoxy | | Type | GAN | GAN | GAN | GAN | GAN | GAN |
| | | | | Parts by mass | 25 | 25 | 25 | 25 | 25 | 25 |
| | | Tetrafunctional Epoxy | | Type | TGDDM | TGDDM | TGDDM | TGDDM | TGDDM | TGDDM |
| | | | | Parts by mass | 30 | 30 | 30 | 30 | 30 | 30 |
| | | Bifunctional Epoxy | | Type | BisF | BisF | BisF | BisF | BisF | BisF |
| | | | | Parts by mass | 45 | 45 | 45 | 45 | 45 | 45 |
| | Aromatic Amine Compound [Cp] | | | Type | 4,4'-DDS | 4, 4'-DDS | 4, 4'-DDS | 4, 4'-DDS | 4, 4'-DDS | 4, 4'-DDS |
| | | | | Parts by mass | 35 | 35 | 35 | 35 | 35 | 35 |
| | Thermoplastic Resin consisting of Polyarylether Skeleton [Dp] | | | Type | PES | PES | PES | PES | PES | PES |
| | | | | Parts by mass | 15 | 15 | 15 | 15 | 15 | 15 |
| Feedstock Composition of Secondary Resin | Thermoplastic Resin Particles [Ep] | | | Type | EPA | EPA | - | EPA | EPA | GA |
| | | | | Parts by mass | 50 | 50 | 0 | 50 | 50 | 30 |
| | | | | Tg (°C) | 157 | 157 | - | 157 | 157 | 157 |
| | | | | Tm (°C) | Not Observed | Not Observed | - | Not Observed | Not Observed | Not Observed |
| | | | | D10 (µm) | 4 | 4 | - | 4 | 4 | 11 |
| | | | | D50 (µm) | 12 | 12 | - | 12 | 12 | 20 |
| | | | | D90 (µm) | 22 | 22 | - | 22 | 22 | 34 |
| | Conductive Nanofiller [Fp] | | | Type | - | - | - | CB | CB | CB |
| | | | | Parts by mass | 0 | 0 | 0 | 5 | 5 | 5 |
| | Conductive Particles of Size 1µm or more [Gp] | | | Type | - | - | - | - | CP26 | - |
| | | | | Parts by mass | 0 | 0 | 0 | 0 | 2 | 0 |
| | Mixed Conductive Particles of Size less than 1µm and Size 1µm or more [FGp] | | | Type | CP02 | CP02 | CP02 | - | - | - |
| | | | | Parts by mass | 5 | 5 | 5 | 0 | 0 | 0 |
| [BFp] Preparation Means of Primary Resin | | | | | Preparation Example 1 | Preparation Example 1 | Preparation Example 1 | Preparation Example 1 | Preparation Example 1 | Preparation Example 1 |
| [BFp] Preparation Means of Secondary Resin | | | | | Preparation Example 1 | Preparation Example 1 | Preparation Example 1 | Preparation Example 1 | Preparation Example 1 | Preparation Example 1 |
| Film Forming Method of Secondary Resin having [FGp] | | | | | Transfer | Transfer | Transfer | - | - | - |
| Value of Equation (Amount of Thermoplastic Resin Particles [Ep] in an Interlayer) | | | | | 50.7 | 50.7 | 45.6 | 50.7 | 50.7 | 152 |
| Ratio of [Gp] Located at From Prepreg Surface to Equal to 20% Depth | | | | (Areal %) | 98 | 80 | 98 | - | 99 | - |
| Ratio of Particle having Aspect Rate 1.1 or more | | | | (%) | 37 | 37 | 32 | 32 | 44 | 47 |
| Structure Size [Fc] in Carbon Fiber Layer | | | | (µm) | - | 1.30 | - | 0.70 | 0.70 | 0.70 |
| Structure Size [Fc] in Interlayer | | | | (µm) | 1.30 | 1.30 | 0.70 | 0.70 | 0.70 | 0.70 |
| Average Thickness of CFRP Interlayer | | | | (µm) | 42 | 43 | 41 | 43 | 43 | 23 |
| Thickness Uniformity of Carbon Fiber Layer | | | | | Fair | Fair | Fair | Fair | Fair | Excellent |
| Slit Processability | | | | - | Excellent | Faillure | Fair | Good | Good | Good |
| CFRP Properties | Volume Resistance in Thickness Direction | | | (Ωcm) | 33 | 28 | 34 | 49 | 13 | 9 |
| | Compressive Strength after Impact | | | (Mpa) | 220 | 220 | 170 | 200 | 210 | 170 |

**[Table 3]**

| | | | | | Comparative Example 7 | Example 19 | Example 20 | Example 21 | Comparative Example 8 | Example 22 |
|---|---|---|---|---|---|---|---|---|---|---|
| Bundle of Carbon Fiber [A] | | | Weight | g/m² | 190 | 190 | 380 | 380 | 380 | 380 |
| | Epoxy Resin [Bp] | Asymmetric Epoxy | | Type | GAN | GAN | GAN | GAN | GAN | GAN |
| | | | | Parts by mass | 25 | 25 | 25 | 25 | 25 | 25 |
| | | Tetrafunctional Epoxy | | Type | TGDDM | TGDDM | TGDDM | TGDDM | TGDDM | TGDDM |
| | | | | Parts by mass | 30 | 30 | 30 | 30 | 30 | 30 |
| | | Bifunctional Epoxy | | Type | BisF | BisF | BisF | BisF | BisF | BisF |
| | | | | Parts by mass | 45 | 45 | 45 | 45 | 45 | 45 |
| | Aromatic Polyamine Compound [Cp] | | | Type | 4,4'-DDS | 4,4'-DDS | 4, 4'-DDS | 4, 4'-DDS | 4, 4'-DDS | 4, 4'-DDS |
| | | | | Parts by mass | 35 | 35 | 35 | 35 | 35 | 35 |
| | Thermoplastic Resin consisting of Polyarylether Skeleton [Dp] | | | Type | PES | PES | PES | PES | PES | PES |
| | | | | Parts by mass | 15 | 15 | 15 | 15 | 15 | 15 |
| Feedstock Composition of Primary Resin | Thermoplastic Resin Particles [Ep] | | | Type | - | - | GA | GA | GA | - |
| | | | | Parts by mass | 0 | 0 | 30 | 20 | 50 | 0 |
| | | | | Tg (°C) | - | - | 160 | 160 | 160 | - |
| | | | | Tm (°C) | - | - | Not Observed | Not Observed | Not Observed | - |
| | | | | D10 (µm) | - | - | 11 | 11 | 11 | - |
| | | | | D50 (µm) | - | - | 20 | 20 | 20 | - |
| | | | | D90 (µm) | - | - | 34 | 34 | 34 | - |
| | Conductive Nanofiller [Fp] | | | Type | CB | CB | | | - | - |
| | | | | Parts by mass | 5 | 5 | 0 | 0 | 0 | 0 |
| | conductive Particles of Size 1µm or more [Gp] | | | Type | | | | | | |
| | | | | Parts by mass | 0 | 0 | 0 | 0 | 0 | 0 |
| | Mixed Conductive Particles of Size less than 1µm and Size 1µm or more [FGp] | | | Type | - | - | Ag | - | Ag | - |
| | | | | Parts by mass | 0 | 0 | 5 | 0 | 5 | 0 |
| | Epoxy Resin [Bp] | Asymmetric Epoxy | | Type | GAN | GAN | GAN | GAN | GAN | GAN |
| | | | | Parts by mass | 25 | 25 | 25 | 25 | 25 | 25 |
| | | Tetrafunctional Epoxy | | Type | TGDDM | TGDDM | TGDDM | TGDDM | TGDDM | TGDDM |
| | | | | Parts by mass | 30 | 30 | 30 | 30 | 30 | 30 |
| | | Bifunctional Epoxy | | Type | BisF | BisF | BisF | BisF | BisF | BisF |
| | | | | Parts by mass | 45 | 45 | 45 | 45 | 45 | 45 |
| | Aromatic Amine Compound [Cp] | | | Type | 4,4'-DDS | 4,4'-DDS | 4, 4'-DDS | 4, 4'-DDS | 4, 4'-DDS | 4, 4'-DDS |
| | | | | Parts by mass | 35 | 35 | 35 | 35 | 35 | 35 |
| | i nermoplastic Resin consisting of Polyarylether Skeleton [Dp] | | | Type | PES | PES | PES | PES | PES | PES |
| | | | | Parts by mass | 15 | 15 | 15 | 15 | 15 | 15 |
| Feedstock Composition of Secondary Resin | Thermoplastic Resin Particles [Ep] | | | Type | PA | GA | - | - | - | EPA |
| | | | | Parts by mass | 30 | 30 | 0 | 0 | 0 | 50 |
| | | | | Tg (°C) | 46 | 160 | - | - | - | 157 |
| | | | | Tm (°C) | 226 | Not Observed | - | - | - | Not Observed |
| | | | | D10 (µm) | 10 | 11 | - | - | - | 4 |
| | | | | D50 (µm) | 20 | 20 | - | - | - | 12 |
| | | | | D90 (µm) | 34 | 34 | - | - | - | 22 |
| | Conductive Nanofiller [Fp] | | | Type | CB | - | - | - | - | CB |
| | | | | Parts by mass | 5 | 0 | 0 | 0 | 0 | 5 |
| | conductive Particles of Size 1µm or more [Gp] | | | Type | - | - | - | - | - | CP26 |
| | | | | Parts by mass | 0 | 0 | 0 | 0 | 0 | 2 |
| | Mixed Conductive Particles of Size less than 1µm and Size 1µm or more [FGp] | | | Type | - | CP02 | Ag | Ag | Ag | - |
| | | | | Parts by mass | 0 | 5 | 5 | 5 | 5 | 0 |
| [BFp] Preparation Means of Primary Resin | | | | | Preparation Example 1 | Preparation Example 1 | Preparation Example 1 | Preparation Example 1 | Preparation Example 1 | Preparation Example 1 |
| [BFp] Preparation Means of Secondary Resin | | | | | Preparation Example **1** | Preparation Example 3 | Preparation Example 3 | Preparation Example 3 | Preparation Example 3 | Preparation Example 1 |
| Film Forming Method of Secondary Resin having [FGp] | | | | | - | Transfer | Transfer | Transfer | Transfer | - |
| Value of Equation (Amount of Thermoplastic Resin Particles [Ep] in an Interlayer) | | | | | 152 | 152 | 45.6 | 30.4 | 76.0 | 50.7 |
| ratio of [Gp] Located at From Prepreg Surface to Equal to 20% Depth | | | | (Areal %) | - | 93 | 83 | 98 | 84 | 99 |
| Ratio of Particle having Aspect Rate 1.1 or more | | | | (%) | 0 | 46 | 36 | 43 | 26 | 32 |
| Structure Size [Fc] in Carbon Fiber Layer | | | | (µm) | 0.70 | 0.70 | 1.30 | - | 1.30 | - |
| Structure Size [Fc] in Interlayer | | | | (µm) | 0.70 | 1.30 | 1.90 | 1.90 | 1.90 | 0.70 |
| Average Thickness of CFRP Interlayer | | | | (µm) | 32 | 26 | 38 | 37 | 57 | 42 |
| Thickness Uniformity of Carbon Fiber Layer | | | | - | Faillure | Good | Fair | Fair | Faillure | Good |
| Slit Processability | | | | - | Good | Good | Faillure | Good | Faillure | Good |
| CFRP Properties | Volume Resistance in Thickness Direction | | | (Ωcm) | 31 | 18 | 32 | 43 | 230 | 22 |
| | Compressive Strength after Impact | | | (Mpa) | 210 | 260 | 180 | 160 | 210 | 260 |

### DESCRIPTION OF SYMBOLS

1 ... Carbon fiber [A]
2 ... Particle having a major axis/minor axis ratio of less than 1.1
3 ... Interlayer between carbon fiber layers
4 ... Thermoplastic resin particle [Ec] having a major axis/minor axis ratio of not less than 1.1
5 ... Conductive particle having a major axis that is equivalent to or longer than the interlayer thickness
6 ... Conductive nanofiller [Fc] forming a conductive path between a carbon fiber and a conductive particle
7 ... Conductive fiber
8 ... Particle having a small particle diameter moving into a carbon fiber layer
9 ... Conductive nanofiller [Fp] mixed with an epoxy resin [Bp]
10 ... Structure of a conductive nanofiller [Fp] mixed with an epoxy resin [Bp] 11 ... Aggregate of a conductive nanofiller [Fc] in a CFRP
12 ... Mass of a conductive paste [BCFGp]
X, Y ... Interlayer thickness. Site X has a larger interlayer thickness than site Y due to large thermoplastic resin particles.
Z1, Z2, Z3 ... Interlayer thickness. All of sites Z1, Z2, and Z3 have the same thickness.

## Claims

1. A carbon fiber reinforced material comprising the following components [A], [BCDc], [Ec], and [Fc]:
[A]: carbon fibers;
[BCDc]: a matrix resin;
[Ec]: thermoplastic resin particles; and
[Fc]: a conductive nanofiller;
the carbon fiber reinforced material having laminated carbon fiber layers in which the carbon fibers [A] are impregnated with the matrix resin [BCDc],
wherein in a cross-section obtained by cutting the carbon fiber reinforced material in a thickness direction at an arbitrary position, the thermoplastic resin particles [Ec] are found to have a major axis/minor axis ratio of not less than 1.1 for not less than 30% of the particles in terms of the number of particles, and
wherein the conductive nanofiller [Fc] has a structure size of not less than 0.6 µm in an interlayer between carbon fiber layers.

2. The carbon fiber reinforced material according to claim 1, wherein primary particles of the conductive nanofiller [Fc] have an aspect ratio of less than 10.

3. The carbon fiber reinforced material according to claim 1 or 2, wherein the conductive nanofiller [Fc] is carbon black.

4. The carbon fiber reinforced material according to any one of claims 1 to 3, wherein the interlayer thickness between the carbon fiber layers is not more than 30 µm.

5. The carbon fiber reinforced material according to any one of claims 1 to 3,
wherein the carbon fibers [A] are present as bundles,
wherein the bundles have an areal weight of not less than 250 g/m², and
wherein the interlayer thickness between the carbon fiber layers is not less than 36 µm.

6. The carbon fiber reinforced material according to any one of claims 1 to 5, wherein a major component of the thermoplastic resin particles [Ec] is any one selected from polyamide 12, polyamide 6/12 copolymer, and Grilamid.

7. The carbon fiber reinforced material according to any one of claims 1 to 6, further comprising a component [Gc]:
[Gc]: conductive particles having an individual particle diameter of not less than 1 µm;
wherein the [Gc] has a particle diameter distribution in which D50 is 11 µm to 100 µm.

8. The carbon fiber reinforced material according to any one of claims 1 to 7, wherein in a cross-section obtained by cutting the carbon fiber reinforced material in a thickness direction at an arbitrary position, the conductive particles [Gc] are unevenly distributed such that not less than 80% by area of the particles are present in the interlayer between the carbon fiber layers.

9. The carbon fiber reinforced material according to any one of claims 1 to 8, wherein the conductive nanofiller [Fc] has a structure size of less than 0.6 µm in the carbon fiber layers.

10. A prepreg comprising: carbon fibers [A], an epoxy resin [Bp], an aromatic polyamine compound [Cp], a thermoplastic resin having a polyarylether backbone [Dp], thermoplastic resin particles [Ep], and a conductive nanofiller [Fp],
wherein a value calculated according to the following Formula (1): {W[A] × (W[Ep1] × mass ratio of first resin + W[Ep2] × mass ratio of second resin)} / {(W[Bp1] + W[Cp1] + W[Dp1]) × mass ratio of first resin + (W[Bp2] + W[Cp2] + W[Dp2]) × mass ratio of second resin}
(wherein the content (areal weight) of the carbon fibers [A] as a component is W_{[A]}; the contents (in parts by mass) of the epoxy resin [Bp], the aromatic polyamine compound [Cp], the thermoplastic resin having a polyarylether backbone [Dp], and the thermoplastic resin particles [Ep] as components in a first resin are W_{[Bp1]}, W_{[Cp1]}, W_{[Dp1]}, and W_{[Ep1]}, respectively; and the contents (in parts by mass) of the epoxy resin [Bp], the aromatic polyamine compound [Cp], the thermoplastic resin having a polyarylether backbone [Dp], and the thermoplastic resin particles [Ep] as components in a second resin are W_{[Bp2]}, W_{[Cp2]}, W_{[Dp2]}, and W_{[Ep2]}, respectively; and wherein in Formula (1), in a case of one-step impregnation without the second resin, the calculation is performed assuming a mass ratio of 1 for the first resin, and a mass ratio of 0 for the second resin)
is not less than 5 and less than 60,
wherein the thermoplastic resin particles [Ep] contain a thermoplastic resin insoluble in an epoxy resin as a major component,
wherein the [Ep] has a Tg of less than 160°C,
wherein the [Ep] has a Tm of less than 185°C, or does not exhibit a definite Tm, and
wherein the [Ep] has a particle diameter distribution in which D10 is not less than 3 µm.

11. The prepreg according to claim 10,
wherein the carbon fibers [A] are present as bundles, and
wherein the bundles have an areal weight of not less than 250 g/m².

12. The prepreg according to claim 10 or 11, comprising:
a first impregnate prepreg containing a mixture of the epoxy resin [Bp], the aromatic polyamine compound [Cp], the thermoplastic resin having a polyarylether backbone [Dp], and the conductive nanofiller [Fp], the mixture being impregnated in the bundles of the carbon fibers [A]; and
second resin films composed of a mixture of the epoxy resin [Bp], the aromatic polyamine compound [Cp], the thermoplastic resin having a polyarylether backbone [Dp], the thermoplastic resin particles [Ep], and the conductive nanofiller [Fp], the second resin films being laminated on both sides of the first impregnate prepreg.

13. The prepreg according to any one of claims 10 to 12, having a width of not more than 5 inches.

14. The prepreg according to any of claims 10 to 13, further comprising conductive particles having an individual particle diameter of not less than 1 µm [Gp], wherein not less than 80% by area of the [Gp] is distributed within a depth range of 20% from a prepreg surface.

15. A carbon fiber reinforced material obtained by curing of the prepreg according to any one of claims 10 to 14.
